(19) Europäisches Patentamt
European Patent Office
Office européen des brevets

(11) **EP 4 377 555 B1**

(12) **EUROPÄISCHE PATENTSCHRIFT**

(45) Veröffentlichungstag und Bekanntmachung des Hinweises auf die Patenterteilung:
**16.04.2025   Patentblatt 2025/16**

(21) Anmeldenummer: **22747036.6**

(22) Anmeldetag: **18.07.2022**

(51) Internationale Patentklassifikation (IPC):
*F01D 1/04* (2006.01)        *F01D 17/14* (2006.01)
*F01D 17/16* (2006.01)       *F02C 1/02* (2006.01)
*F02C 9/22* (2006.01)        *F17D 1/04* (2006.01)
*F01D 15/10* (2006.01)

(52) Gemeinsame Patentklassifikation (CPC):
**F02C 1/05; F01D 1/04; F01D 15/10; F01D 17/14; F01D 17/162;** F05D 2220/62; F05D 2220/76; F05D 2270/024; F05D 2270/62; F17D 1/04

(86) Internationale Anmeldenummer:
**PCT/EP2022/069973**

(87) Internationale Veröffentlichungsnummer:
**WO 2023/006461 (02.02.2023 Gazette 2023/05)**

(54) **ROHRTURBINENVORRICHTUNG FÜR EIN FLUIDTRANSPORTNETZ**

TUBULAR TURBINE DEVICE FOR A FLUID TRANSPORT NETWORK

DISPOSITIF DE TURBINE TUBULAIRE POUR UN RÉSEAU DE TRANSPORT DE FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.07.2021   DE 102021119820**

(43) Veröffentlichungstag der Anmeldung:
**05.06.2024   Patentblatt 2024/23**

(73) Patentinhaber: **RWE Gas Storage West GmbH 45141 Essen (DE)**

(72) Erfinder:
• **EFFING, Christian**
  **45141 Essen (DE)**
• **BRÜMMER, Andreas**
  **45141 Essen (DE)**
• **NAL, Felix**
  **45141 Essen (DE)**
• **NEUHAUS, Guido**
  **45141 Essen (DE)**

(74) Vertreter: **Cohausz & Florack Patent- & Rechtsanwälte Partnerschaftsgesellschaft mbB Bleichstraße 14 40211 Düsseldorf (DE)**

(56) Entgegenhaltungen:
**EP-A1- 0 568 909        EP-A1- 1 905 948
EP-A2- 0 609 674        WO-A1-2016/120626
WO-A1-98/57046          DE-A1- 102018 209 204
JP-B2- 3 612 153          US-A- 2 917 636
US-A1- 2008 252 078**

# EP 4 377 555 B1

**Beschreibung**

Die Erfindung g betrifft eine Rohrturbinenvorrichtung für ein Fluidtransportnetz, umfassend mindestens eine auf einer Turbinenwelle angeordnete Laufeinrichtung, mindestens eine in Strömungsrichtung vor der Laufeinrichtung angeordnete Leiteinrichtung und mindestens einen mit der Turbinenwelle gekoppelten Generator, eingerichtet zum Wandeln der mechanischen Energie in elektrische Energie. Darüber hinaus betrifft die Erfindung ein Verfahren zum Betreiben einer Rohrturbinenvorrichtung, ein Fluidruckentspannungssystem für ein Fluidtransportnetz und eine Verwendung einer Rohrturbinenvorrichtung zur Durchführung einer Fluidentspannung. Fluidtransportnetze werden im Stand der Technik zum Transportieren eines Fluids eingesetzt. Ein Fluidtransportnetz umfasst in der Regel Transportnetzrohre bzw. Transportnetzleitungen, durch die das Fluid unter Druck gefördert wird. Das Fluid durchströmt somit das mindestens eine Transportnetzrohr.

Ein Beispiel eines Fluidtransportnetzes ist ein Gastransportnetz zum Befördern bzw. Transportieren eines Gases. Ein solches Gastransportnetz kann aus mindestens einem Gasferntransportnetz und insbesondere einer Mehrzahl von mit dem Gasferntransportnetz gekoppelten Gasverteilnetzen gebildet sein. Ein Gasferntransportnetz kann aus einer Mehrzahl von Ferntransportrohren (z.B. aus Stahl) gebildet sein. Ebenso kann ein Gasverteilnetz aus einer Mehrzahl von Verteilrohren (z.B. aus Stahl) gebildet sein.

Beispielsweise kann von einer Gasquelle (z.B. ein Gasspeicher) das Gas zunächst über das Gasferntransportnetz transportiert werden. Über ein an das Gasferntransportnetz angeschlossenes Gasverteilnetz kann dann das Gas zu einem (End-) Verbraucher (auch Endkunden genannt) transportiert werden. Der Transport des Gases in dem Gastransportnetz erfolgt in der Regel mit unterschiedlichen Druckniveaus.

Beispielsweise kann ein Gasferntransportnetz mit einem Gasdruck bzw. Gasdruckniveau zwischen 90 bar und 110 bar betrieben werden. Das Gasdruckniveau bzw. der Rohrleitungsdruck eines Gasverteilnetzes kann beispielsweise im Bereich von 16 bar liegen (dies ist beispielsweise in Deutschland der Fall). Bis zu einem Endverbraucher kann der Rohrleitungsdruck weiter reduziert werden, beispielsweise auf einige Millibar Überdruck.

Für eine entsprechende Gasdruckentspannung kann ein Gasdruckentspannungssystem in dem Gastransportnetz eingesetzt werden, beispielweise zwischen einem Gasferntransportnetz und einem Gasverteiltransportnetz (oder an anderen Stellen, an denen eine Gasentspannung erforderlich ist). Ein Gasentspannungssystem kann eine oder mehrere Gasentspannungsanlage(n) umfassen. Eine Gastentspannungsanlage kann mindestens eine Turbinenvorrichtung zur Gasentspannung umfassen.

Aus der Druckschrift EP 3 001 012 A2 ist eine Möglichkeit bekannt, mit der eine in einem Gastransportnetz erforderliche Gasdruckentspannung effektiv genutzt werden kann. So beschreibt die EP 3 001 012 A2 eine Rohrturbinenvorrichtung für ein Gastransportnetz, umfassend mindestens eine auf einer Turbinenwelle angeordnete Laufeinrichtung, mindestens eine in Strömungsrichtung vor der Laufeinrichtung angeordnete Leiteinrichtung und mindestens einen mit der Turbinenwelle gekoppelten Generator, eingerichtet zum Wandeln der mechanischen Energie in elektrische Energie. Insbesondere wird bei der Gasdruckentspannung die Bewegungsenergie des Gases durch die mit der Turbinenwelle gekoppelte Laufeinrichtung und dem mit der Turbinenwelle gekoppelten Generator in elektrische Energie gewandelt. Diese kann beispielsweise in ein elektrisches Verteilnetz eingespeist werden.

Nachteilig bei der Rohrturbinenvorrichtung gemäß der EP 3 001 012 A2 ist jedoch, dass nicht stets die maximal mögliche elektrische Energie bzw. Leistung erzeugt wird. Es ist erkannt worden, dass der Grund für den nicht optimalen elektrischen Energieertrag die festbeaufschlagte Rohrturbinenvorrichtung ist. Eine festbeaufschlagte Rohrturbinenvorrichtung meint insbesondere, dass die Rohrturbinenvorrichtung für einen bestimmten, in der Regel den maximal möglichen, Fluidvolumenstrom ausgelegt ist. Bei diesem Volumenstrom generiert die Rohrturbinenvorrichtung im Nennbetrieb die maximale elektrische Energie bzw. Leistung. Allerdings ist erkannt worden, dass es bei einem Gastransportnetz, aber auch bei anderen Fluidtransportnetzen, bei denen insbesondere eine Druckentspannung erforderlich ist, zu (zeitabhängigen und insbesondere stark) schwankenden Volumenströmen kommt, also insbesondere auch zu stark reduzierten Volumenströmen. Dies führt dazu, dass insbesondere der elektrische Energieertrag bei einer Rohrturbinenvorrichtung gemäß der EP 3 001 012 A2 signifikant reduziert ist.

Die Druckschrift EP 1 905 948 A1 offenbart eine Maschine zur Rückgewinnung von Energie aus einem Strom von komprimiertem Gas, zum Beispiel Erdgas, die zum einen einen Turboexpander mit einem Turboexpanderrad und zum anderen einen Generator mit einem Rotor umfasst, der von dem Turboexpanderrad und einem Stator um den Rotor angetrieben werden kann. Darüber hinaus ist aus der Druckschrift EP 0 609 674 A2 ein ansaugluftgetriebener Wechselstromgenerator und ein Verfahren zur Umwandlung von Ansaugluftenergie in elektrische Energie bekannt.

Das Dokument US 2 917 636 A bezieht sich auf frequenzgeregelte Turbogeneratoren und insbesondere auf fluidgetriebene elektrische Generatoren, bei denen die elektrischen Ausgangscharakteristika über weite Bereiche der Fluidströmung genau geregelt werden. Ferner offenbart die US 2008/252078 A1 ein Generatorsystem, das mit dem Arbeitsmittel in einem Rankine-Zyklus verwendet werden kann, um die Wärme aus einer Reihe von kommerziellen Anwendungen, und um diese Wärmeenergie in elektrische Energie umzuwandeln.

Aus der EP 0 568909 A1 ist eine Dampfturbine mit einem Drehschieber zur Steuerung des Dampfdurchsatzes bekannt, wobei im Drehschieber vorgesehene Steuerschlitze mit in einem ortsfesten Kanalkörper ausgebildeten Kanaleingängen so zusammenwirken, dass diese entsprechend der jeweiligen Drehrichtung des Drehschiebers zunehmend geöffnet oder geschlossen werden. Die Druckschrift WO 2016/120626 A1 offenbart ein System zur Druckreduzierung in einem Gasstrom für ein Gasablasssystem, das Folgendes umfasst: Einen Expander, der von einem ersten Gas Eingang angetrieben wird; einen Wärmetauscher, wobei ein Ausgang des Expanders dem Wärmetauscher zugeführt wird; und einen Kompressor, der durch einen zweiten Gas Kompressor, der durch einen zweiten Gaseingang angetrieben wird, wobei ein Teil des Wärmetauscherausgangs mit Gas kombiniert wird, das den Kompressor durchströmt hat, um einen Auslassstrom zu bilden, so dass der Druck in dem Auslassstrom niedriger ist als der Druck des ersten Gaseingangs.

Darüber hinaus offenbart die JP 3 612153 B2 ein automatisches Druckregelventil für eine Turbine, das sich in einer Gasleitung auf der Einlassseite einer Expansionsturbine befindet. Schließlich ist aus der WO 98/57046 A1 eine Anordnung für eine Gasentspannungsturbine zur Verwendung in einem Gasversorgungsrohrsystem, insbesondere in einem Fernleitungsrohrsystem zur Bereitstellung von Gas an Niederdruckverbraucher bekannt.

Daher liegt der Erfindung die Aufgabe zugrunde, eine Rohrturbinenvorrichtung für ein Fluidtransportnetz, insbesondere ein Gastransportnetz, bereitzustellen, bei der das zuvor beschriebene Problem reduziert und insbesondere der elektrische Energieertrag erhöht ist.

Die Aufgabe wird gemäß einem ersten Aspekt der Erfindung gelöst durch eine Rohrturbinenvorrichtung für ein Fluidtransportnetz, insbesondere ein Gastransportnetz, nach Anspruch 1. Die Rohrturbinenvorrichtung umfasst mindestens eine auf einer Turbinenwelle angeordnete Laufeinrichtung. Die Rohrturbinenvorrichtung umfasst mindestens eine in Strömungsrichtung vor der Laufeinrichtung angeordnete Leiteinrichtung. Die Rohrturbinenvorrichtung umfasst mindestens einen mit der Turbinenwelle gekoppelten Generator, eingerichtet zum Wandeln der mechanischen Energie in elektrische Energie. Die Rohrturbinenvorrichtung umfasst mindestens eine Querschnittsanpassungseinrichtung, eingerichtet zum Ändern einer durchströmbaren Querschnittsfläche der Rohrturbinenvorrichtung abhängig von dem Volumenstrom des die Rohrturbinenvorrichtung durchströmenden Fluids.

Die Querschnittsanpassungseinrichtung umfasst erfindungsgemäß mindestens ein Plattenmodul mit mindestens einem in einer Durchflussöffnung des Plattenmoduls radial beweglich angeordneten Sperrelement.

Die Rohrturbinenvorrichtung, auch Inline-Rohrturbine genannt, dient dem Einsatz in einem Fluidtransportnetz. Die Rohrturbinenvorrichtung ist (grundsätzlich) eingerichtet zum Durchführen einer Fluiddruckentspannung in einem Fluidtransportnetz von einem ersten Fluiddruckniveau auf ein zweites Fluiddruckniveau. Das zweite Fluidruckniveau ist hierbei geringer als das erste Fluiddruckniveau. Das Durchführen einer Fluiddruckentspannung meint insbesondere, dass ein unter Druck stehendes Fluid unter Abführung von Arbeit expandiert wird.

Grundsätzlich kann das Fluid ein Fluid sein, das unter Druck durch ein Fluidtransportnetz transportiert wird. Das anmeldungsgemäße Fluid ist vorzugsweise ein gasförmiges Fluid bzw. ein gasförmiges Medium. Insbesondere kann das gasförmige Medium ein technisches Gas und/oder ein Brenngas sein.

Beispielhafte und nicht abschließende gasförmige Medien sind insbesondere Erdgas, Biogas und Wasserstoff. Bei Erdgas handelt es sich insbesondere um ein Gasgemisch auf der Basis von Methan, dessen Zusammensetzung und Brennwert schwanken kann. Der Begriff Biogas bezeichnet insbesondere auch ein Gasgemisch auf der Basis von Methan, welches ebenfalls in der Zusammensetzung und im Brennwert schwanken kann.

Die Rohrturbinenvorrichtung kann ein Turbinengehäuse umfassen. Das Turbinengehäuse kann aus Metall hergestellt sein, insbesondere Stahl. Das Turbinengehäuse kann einen Eingang aufweisen, an dem ein erstes Transportnetzrohr bzw. eine erste Transportnetzleitung des Fluidtransportnetzes anschließbar ist. Das Turbinengehäuse kann, insbesondere an der zu dem Eingang gegenüberliegenden Seite des Turbinengehäuses, einen Ausgang aufweisen, an dem ein zweites Transportnetzrohr bzw. eine zweite Transportnetzleitung des Fluidtransportnetzes anschließbar ist. Das Turbinengehäuse kann beispielsweise als im Wesentlichen gradlinige Fortsetzung der genannten Transportnetzrohre gebildet sein. Das erste Transportnetzrohr und das zweite Transportnetzrohr können insbesondere an dem Eingang bzw. dem Ausgang anflanschbar sein.

Die Rohrturbinenvorrichtung umfasst (insbesondere innerhalb des Turbinengehäuses) mindestens eine auf einer Turbinenwelle angeordnete (bzw. gelagerte) Laufeinrichtung. Die Turbinenwelle ist also mit der Laufeinrichtung (mechanisch, insbesondere drehmomentschlüssig) gekoppelt. Die Laufeinrichtung umfasst insbesondere ein Laufrad mit einer Mehrzahl an Laufradschaufeln.

Das von dem Eingang zu dem Ausgang strömende Fluid bewirkt insbesondere eine mechanische Bewegung der Laufeinrichtung. Dies führt zu einer Entspannung des Fluiddrucks. Darüber hinaus wird die mechanische Bewegung der Laufeinrichtung auf die Turbinenwelle übertragen, insbesondere in eine Rotationsbewegung der Turbinenwelle.

Die Turbinenwelle ist mit mindestens einem Generator (mechanisch) gekoppelt. Der Generator ist also insbesondere auf der Turbinenwelle angeordnet bzw. gelagert. Bei anderen Varianten kann eine mittelbare Kopplung vorgesehen sein, beispielsweise ein Getriebe zwischengeschaltet sein.

Der Generator wandelt (in herkömmlicher Weise) die Rotationsbewegung der Welle bzw. die Rotationsenergie in elektrische Energie um. Mit anderen Worten, der mindestens eine mit der Turbinenwelle gekoppelte Generator ist eingerichtet zum Wandeln der mechanischen Energie in elektrische Energie.

Der Generator kann beispielsweise eine Asynchron-Maschine sein. Der mindestens eine Generator kann in dem Turbinengehäuse insbesondere "schwebend" angeordnet sein. Der Generator bzw. das Generatorgehäuse kann von dem Fluid zumindest teilweise umströmt werden.

Der mindestens eine Generator kann in Strömungsrichtung vor der Laufeinrichtung angeordnet sein. Alternativ kann der mindestens eine Generator in Strömungsrichtung hinter der Laufeinrichtung oder zusätzlich zu dem Generator vor der Laufeinrichtung ein weiterer Generator hinter derselben angeordnet sein. Die Anordnung des mindestens einen Generators kann insbesondere von dem zu transportierenden Fluids abhängen. Insbesondere bei Wasserstoff ist es von Vorteil, den Generator in Strömungsrichtung vor der Laufeinrichtung anzuordnen. Durch eine entsprechende Anordnung kann bei Wasserstoff eine optimierte Kühlung erreicht werden. Bei Erdgas oder Biogas kann es von Vorteil sein, den Generator in Strömungsrichtung hinter der Laufeinrichtung anzuordnen. Grund hierfür ist, dass durch die Gasentspannung die Gastemperatur sinkt und daher das Gas in Strömungsrichtung hinter der Laufeinrichtung eine niedrigere Temperatur als vor der Laufeinrichtung besitzt. Die Kühlung kann verbessert werden. Gleichzeitig kann durch den Generator die Gastemperatur erhöht werden (dies ist in der Regel erwünscht). Anders ausgedrückt, kann in einem Fall die Generatorabwärme genutzt werden und in dem anderen Fall die Kühlwirkung am Generator verbessert werden. Der Vorteil von zwei Generatoren kann insbesondere sein, dass diese bei gleicher Gesamtleistung eine kleinere Störkontur aufweisen können.

Insbesondere für eine optimierte Anströmung der Laufeinrichtung (insbesondere der Laufradschaufeln) mit dem Fluid ist in Strömungsrichtung vor der Laufeinrichtung eine Leiteinrichtung bzw. Lenkeinrichtung angeordnet. Die Leiteinrichtung ist insbesondere auf die Laufeinrichtung abgestimmt. Vorzugsweise ist die Leiteinrichtung eingerichtet, das Fluid auf die Laufeinrichtung mit einer bestimmten Richtung zu leiten.

Bei einer bevorzugten Ausführungsform kann die Rohrturbinenvorrichtung in Form einer Gleichdruck-Turbine gebildet sein. Die Laufeinrichtung kann vorzugsweise ein Laufrad mit einer Mehrzahl von Laufradschaufeln umfassen. Die Leiteinrichtung kann auf diese Laufeinrichtung abgestimmt sein. Insbesondere kann in der Leiteinrichtung eine Mehrzahl von Leitkanälen bzw. Düsenkanälen (auch als Düsen bezeichnet) angeordnet sein, welche den Fluidstrom derart auf die Laufradschaufeln lenken und insbesondere beschleunigen, dass die Laufradschaufeln (optimal) angeströmt werden. Anders ausgedrückt, kann in einer Rohrturbinenvorrichtung insbesondere in Form einer Gleichdruck-Turbine ein (Trieb-) Fluid in einem oder mehreren Strahl(en) mit sehr hoher Geschwindigkeit aus einer oder mehreren (tangential) zum Umfang des Laufrades angeordneten Düsen der Leiteinrichtung auf die Schaufeln des Laufrades strömen.

Für einen zumindest nahezu optimalen Betrieb der Rohrturbinenvorrichtung, insbesondere des mit der Laufeinrichtung über eine Turbinenwelle gekoppelten Generators der Rohrturbinenvorrichtung, ist der durchströmbare Eingangsquerschnitt der Rohrturbinenvorrichtung veränderbar.

Dies meint insbesondere, dass der Eingangsquerschnitt zumindest zwischen zwei unterschiedlichen Querschnittswerten bzw. -flächen verstellbar ist. Vorzugseise kann der Eingangsquerschnitt zwischen einem maximalen Eingangsquerschnitt (-swert) und einem minimalen Eingangsquerschnitt (-swert), insbesondere in diskreter oder kontinuierlicher Weise, durch die Querschnittsanpassungseinrichtung geändert werden. Der Eingangsquerschnitt kann insbesondere bis zu dem maximalen Eingangsquerschnitt (-swert) vergrößert und bis zu dem minimalen Eingangsquerschnitt (-swert) verringert werden.

Vorzugsweise meint die durchströmbare Querschnittsfläche der Rohrturbinenvorrichtung vorliegend eine durchströmbare Eingangs- und/oder Ausgangsquerschnittsfläche. Insbesondere meint die durchströmbare Querschnittsfläche der Rohrturbinenvorrichtung vorliegend eine durch das Fluid durchströmbare und im Querschnitt veränderliche Querschnittsfläche, die (innerhalb der Rohrturbinenvorrichtung gelegen) zumindest vor der Laufeinrichtung angeordnet ist. Insbesondere ist eine Eingangsquerschnittsfläche zwischen der Laufeinrichtung und dem Eingang gelegen. Eine Ausgangsquerschnittsfläche kann hinter der Laufeinrichtung und vor dem Ausgang gelegen sein.

Die Querschnittsanpassungseinrichtung umfasst mindestens ein verstellbares bzw. bewegliches Querschnittsanpassungsmodul**,** das eingerichtet ist, durch eine Verstellung bzw. Bewegung die durchströmbare Querschnittsfläche zu verändern.

Gemäß einer Ausführungsform der erfindungsgemäßen Rohrturbinenvorrichtung kann die Querschnittsanpassungseinrichtung eingerichtet sein zum Verringern der Querschnittsfläche, wenn sich der Volumenstrom des die Rohrturbinenvorrichtung durchströmenden Fluids reduziert. Anders ausgedrückt, kann eine Volumenstromreduktion eine (passive) Querschnittsflächenverringerung bewirken. Je mehr sich der Volumenstrom reduziert, desto mehr kann die Querschnittsfläche verringert werden. Insbesondere kann das mindestens eine Querschnittsanpassungsmodul derart (aktiv) bewegt werden, dass die zur Laufeinrichtung vorhandene durchströmbare Querschnittsfläche reduziert ist (verglichen zu der zur Laufeinrichtung vorhandenen durchströmbaren Querschnittsfläche bei einem höheren Volumenstrom).

Alternativ oder, vorzugsweise, zusätzlich kann die Querschnittsanpassungseinrichtung eingerichtet sein zum Vergrößern der Querschnittsfläche, wenn sich der Volumenstrom des die Rohrturbinenvorrichtung durchströmenden Fluids erhöht. Anders ausgedrückt, kann eine Volumenstromerhöhung eine Querschnittsflächenvergrößerung bewirken. Je mehr sich der Volumenstrom erhöht, desto mehr kann die Querschnittsfläche vergrößert werden. Insbesondere kann das mindestens eine Querschnittsanpassungsmodul derart bewegt werden, dass die zur Laufeinrichtung vorhandene durchströmbare Querschnittsfläche erhöht ist (verglichen zu der zur Laufeinrichtung vorhandenen durchströmbaren Querschnittsfläche bei einem niedrigeren Volumenstrom).

Vorzugsweise kann die Änderung durch die Querschnittsanpassungseinrichtung von einer (vorgegebenen) mathematischen Beziehung (z.B. Funktion, Tabelle etc.) zwischen Volumenstrom und einzustellender Querschnittsfläche abhängen.

Gemäß einer bevorzugten Ausführungsform der erfindungsgemäßen Rohrturbinenvorrichtung kann die Querschnittsanpassungseinrichtung eingerichtet sein zum Ändern der Querschnittsfläche, derart, dass die Strömungsgeschwindigkeit des die Rohrturbinenvorrichtung durchströmenden Fluids durch die Querschnittsfläche im Wesentlichen gleich bleibt. Dies meint insbesondere, dass das Fluid die Lauf- und Leiteinrichtung stets mit der zumindest nahezu gleichen Strömungsgeschwindigkeit (in Meridianrichtung) an- bzw. durchströmt. Insbesondere erfolgt dies derart, dass die Strömungswinkel der Geschwindigkeitsfelder für eine konstante Umfangsgeschwindigkeit nahezu gleich bleiben. Insbesondere hängt die Strömungsgeschwindigkeit mit dem Volumenstrom und der Querschnittsfläche gemäß folgender Beziehung zusammen:

$$v\_m = Q/A \tag{1}$$

wobei v_m die Strömungsgeschwindigkeit in Meridianrichtung, Q der Volumenstrom und A die Querschnittsfläche ist. Wie ersichtlich ist, kann bei einem geänderten Volumenstrom Q durch eine Änderung der durchströmbaren Querschnittsfläche A, also der Eingangsquerschnittsfläche A und/oder der Ausgangsquerschnittfläche A, die Strömungsgeschwindigkeit im Wesentlichen auf einem bestimmten (gewünschten) Sollwert zumindest nahezu konstant gehalten werden.

Hierdurch kann der Betrieb der Rohrturbinenvorrichtung, insbesondere des mit der Laufeinrichtung über eine Turbinenwelle gekoppelten Generators der Rohrturbinenvorrichtung, noch weiter optimiert und damit insbesondere der elektrische Energieertrag erhöht werden.

Gemäß einer weiteren Ausführungsform der erfindungsgemäßen Rohrturbinenvorrichtung kann die Querschnittsanpassungseinrichtung eine passiv betriebene Querschnittsanpassungseinrichtung sein. Eine passiv betriebene Querschnittsanpassungseinrichtung meint insbesondere eine Querschnittsanpassungseinrichtung, die ohne von außen zugeführte Energie betreibbar ist. Der Vorteil einer passiven Ausgestaltung ist insbesondere - im Vergleich zu einer aktiv betriebenen Querschnittsanpassungseinrichtung - der geringe Aufwand und/oder die geringe Komplexität einer solchen Einrichtung.

Eine passiv betriebene Querschnittsanpassungseinrichtung kann vorzugsweise ein (zuvor beschriebenes) Querschnittsanpassungsmodul mit einem (passiv betriebenen) Rückstellelement umfassen. Ein Querschnittsanpassungsmodul mit Rückstellelement kann eingerichtet sein, abhängig von der durch das strömende Fluid auf das passive Querschnittsanpassungsmodul ausgeübte Kraft (und damit von dem augenblicklichen Volumenstrom durch die Rohrturbinenvorrichtung) die durchströmbare Querschnittsfläche zu ändern, also insbesondere zu verringern oder zu vergrößern.

Gemäß einer weiteren Ausführungsform der erfindungsgemäßen Rohrturbinenvorrichtung - insbesondere als Alternative zu der passiv betriebenen Querschnittsanpassungseinrichtung - kann die Querschnittsanpassungseinrichtung eine aktiv betriebene Querschnittsanpassungseinrichtung sein. Eine aktiv betriebene Querschnittsanpassungseinrichtung meint insbesondere eine Querschnittsanpassungseinrichtung, die mit von außen zugeführter Energie betreibbar ist. Der Vorteil einer aktiven Ausgestaltung ist insbesondere - im Vergleich zu einer passiv betriebenen Querschnittsanpassungseinrichtung - die erhöhte Genauigkeit bei der Einstellung der (im Wesentlichen) optimalen Querschnittsfläche.

Eine aktiv betriebene Querschnittsanpassungseinrichtung kann insbesondere ein Querschnittsanpassungsmodul mit einem (aktiv betriebenen) Stellmotor und insbesondere einem Regelmodul zum Ansteuern des Stellmotors umfassen. Das Regelmodul kann insbesondere in dem Stellmotor integriert sein. Der Stellmotor kann beispielsweise ein Elektromotor oder ein Hydraulikmotor sein.

Gemäß einer bevorzugten Ausführungsform kann die aktiv betriebene Querschnittsanpassungseinrichtung mindestens ein durch einen Stellmotor verstellbares Querschnittsanpassungsmodul umfassen, eingerichtet zum Ändern der durchströmbaren Querschnittsfläche (wie bereits beschrieben wurde). Die aktiv betriebene Querschnittsanpassungseinrichtung kann mindestens ein Regelmodul umfassen, eingerichtet zum Ansteuern des Stellmotors, abhängig von einem bereitgestellten (gemessenen) Fluidvolumenwert und einem vorgegebenen Fluidvolumensollwert.

Der bereitgestellte (augenblickliche) Fluidvolumenwert kann beispielsweise durch ein in einer Regelstation des Fluidtransportnetzes (ohnehin) angeordnetes Messmodul gemessen und dann insbesondere an das Regelmodul übertragen werden. Alternativ oder zusätzlich kann die Rohrturbinenvorrichtung ein Messmodul umfassen, eingerichtet zum Messen des (augenblicklichen) Fluidvolumenwerts in der Rohrturbinenvorrichtung. Vorzugsweise kann das Messmodul die Messung hinter der Querschnittsanpassungseinrichtung (also insbesondere hinter der veränderbaren Querschnittsfläche) und vor der Laufeinrichtung durchführen. Das Messmodul kann zum Bereitstellen des gemessenen Fluidvolumenwerts an das Regelmodul eingerichtet sein.

Ferner kann ein Fluidvolumensollwert derart vorgegebenen sein, dass die Rohrturbinenvorrichtung (stets, zumindest nahezu stets) in dem optimalen Arbeitspunkt betrieben wird. Der elektrische Energieertrag kann noch weiter verbessert werden. Das Regelmodul kann beispielsweise in dem Stellmotor integriert sein. Der Stellmotor kann derart angesteuert, insbesondere geregelt werden, dass das auf die Laufeinrichtung treffende Fluid stets eine bestimmte Strömungsgeschwindigkeit, insbesondere die optimale Strömungsgeschwindigkeit (in Betrag und Richtung) besitzt.

Ein Fluidvolumenwert (oder -sollwert) ist insbesondere ein Wert, der mit dem Fluidvolumen in einer (bestimmten) Beziehung steht, und insbesondere ein Wert, der auf einem gemessenen Fluidparameter basiert. So kann ein Fluidvolumenwert beispielsweise auch ein gemessener Strömungsgeschwindigkeitswert sein. Entsprechendes gilt für den mindestens einen Fluidvolumensollwert.

Es versteht sich, dass bei Varianten der Erfindung auch die Querschnittsanpassungseinrichtung ein passiv betriebenes Querschnittsanpassungsmodul und ein aktiv betriebenes Querschnittsanpassungsmodul umfassen kann.

Die Querschnittsanpassungseinrichtung kann gemäß einer weiteren Ausführungsform vor der Leiteinrichtung (und hinter dem Eingang des Turbinengehäuses) und/oder unmittelbar vor bzw. hinter dem Laufrad angeordnet sein.

Bei einer weiteren Ausführungsform kann die Querschnittsanpassungseinrichtung auch in der Leiteinrichtung integriert sein, insbesondere in mindestens einem Strömungskanal bzw. Düsenkanal der Leiteinrichtung (vorzugsweise in einer Mehrzahl der Düsenkanäle, insbesondere bevorzugt in sämtlichen Düsenkanälen).

Es versteht sich, dass bei Varianten der Erfindung auch eine Querschnittsanpassungseinrichtung vor der Leiteinrichtung (und hinter dem Eingang des Turbinengehäuses) angeordnet sein und eine weitere Querschnittsanpassungseinrichtung in der Leiteinrichtung und /oder unmittelbar vor bzw. hinter dem Laufrad integriert sein kann.

Grundsätzlich gibt es eine Mehrzahl von Ausführungsformen für eine Querschnittsanpassungseinrichtung. Insbesondere kann die Ausführungsform abhängig von der Einbausituation in der Turbine (z.B. innerhalb einer mit Druck beaufschlagten Rohrleitung; Generator in der Rohrleitung vom Gas umströmt; Generator stromauf, stromab oder auf beiden Seiten der Turbinenstufe zur Leistungserhöhung positionierbar) gewählt werden.

Gemäß einer nicht unter die Ansprüche fallenden Ausführungsform der Rohrturbinenvorrichtung kann die Querschnittsanpassungseinrichtung mindestens ein in Strömungsrichtung vor der Leiteinrichtung angeordnetes Drehscheibenmodul (auch als Stellscheibe bezeichnet) umfassen. Das Drehscheibenmodul kann mindestens eine zwischen einer maximalen Querschnittsfläche und einer minimalen Querschnittsfläche (auch Null) verstellbare Durchflussöffnung aufweisen.

In der vorliegenden Ausführungsform kann das Drehscheibenmodul insbesondere ein zuvor beschriebenes Querschnittsanpassungsmodul sein. Vorzugsweise kann eine derartige Querschnittsanpassungseinrichtung eine aktiv betriebene Querschnittsanpassungseinrichtung sein. Insbesondere kann durch eine Drehaktion, beispielsweise bewirkt durch einen (zuvor beschriebenen) Stellmotor, eine Änderung der mindestens einen Durchflussöffnung bewirkt werden. Die Durchflussöffnung bzw. deren Durchflussquerschnitt ist insbesondere änderbar, derart, dass die durchströmbare Querschnittsfläche geändert wird.

Grundsätzlich kann bei dieser Ausführungsform eine Durchflussöffnung vorliegend eine Gesamt-Durchflussöffnung meinen, die aus einer Mehrzahl von einzelnen Durchflussöffnungen (auch Strömungskanäle genannt) gebildet sein kann.

Vorzugsweise kann das Drehscheibenmodul zumindest eine erste Scheibe mit mindestens einer ersten Scheibenöffnung und eine zweite über der ersten Scheibe angeordnete Scheibe mit mindestens einer zweiten zu der ersten Scheibenöffnung korrespondierenden Scheibenöffnung umfassen. Insbesondere können zumindest zwei erste und zwei zweite Scheibenöffnungen vorgesehen sein. Korrespondierend meint, dass eine erste Scheibenöffnung hinsichtlich Lage und Form auf mindestens eine zweite Scheibenöffnung abgestimmt sein kann, so dass eine Durchflussöffnung mit einer bestimmten Querschnittsfläche durch die erste und zweite Scheibenöffnung gebildet werden kann.

Durch ein Verdrehen (um eine Rotationsachse, vorzugsweise die Turbinenachse) der zweiten Scheibe in Relation zu der ersten Scheibe kann die Querschnittsfläche der mindestens einen Durchflussöffnung zwischen der maximalen Querschnittsfläche (in diesem Fall liegen die erste und die zweite Scheibenöffnung (bzw. die jeweiligen ersten und zweiten Scheibenöffnungen) im Wesentlichen übereinander) und einer minimalen Querschnittsfläche (in diesem Fall liegen die erste und die zweite Scheibenöffnung (bzw. die jeweiligen ersten und zweiten Scheibenöffnungen) im Wesentlichen nicht übereinander; auch kann vorgesehen sein, dass nur eine erste von einer Mehrzahl von Öffnungen über einer zweiten von einer Mehrzahl von Öffnungen liegt) verstellbar sein.

Die zweite Scheibe und/oder die erste Scheibe kann/können insbesondere durch einen Stellmotor verstellbar sein bzw. verfahrbar sein. Vorzugsweise kann der Stellmotor ein elektrischer Stellmotor sein. Vorzugsweise kann der mindestens eine Generator der Rohrturbinenvorrichtung den mindestens einen Stellmotor mit elektrischer Energie versorgen.

Gemäß einer weiteren nicht unter die Ansprüche fallenden Ausführungsform der Rohrturbinenvorrichtung kann die Querschnittsanpassungseinrichtung mindestens ein in Strömungsrichtung vor der Leiteinrichtung angeordnetes drehbares Zylindermodul (auch Hülsenmodul genannt) umfassen. Das Zylindermodul kann mindestens eine zwischen einer maximalen Querschnittsfläche und einer minimalen Querschnittsfläche verstellbare Durchflussöffnung aufweisen. Drehbar bzw. verdrehbar meint, dass zumindest ein Teil (erster Zylinder) des Zylindermoduls drehbar ist, insbesondere gegenüber einem anderen Teil (zweiter Zylinder) des Zylindermoduls. Zumindest eines dieser Teile kann in Bezug zu Turbinengehäuse unbeweglich sein.

In der vorliegenden Ausführungsform kann das drehbare Zylindermodul insbesondere ein zuvor beschriebenes Querschnittsanpassungsmodul sein. Vorzugsweise kann eine derartige Querschnittsanpassungseinrichtung eine aktiv betriebene Querschnittsanpassungseinrichtung sein. Insbesondere kann durch eine Drehaktion, beispielsweise bewirkt durch einen (zuvor beschriebenen) Stellmotor, eine Änderung der mindestens einen Durchflussöffnung bewirkt werden. Die Durchflussöffnung bzw. deren Durchflussquerschnitt ist insbesondere änderbar, derart, dass die durchströmbare Querschnittsfläche geändert wird.

Grundsätzlich kann bei dieser Ausführungsform eine Durchflussöffnung vorwiegend eine Gesamt-Durchflussöffnung meinen, die aus einer Mehrzahl von einzelnen Durchflussöffnungen gebildet sein kann.

Vorzugsweise kann das drehbare Zylindermodul zumindest einen ersten Zylinder mit mindestens einer ersten Zylinderöffnung und einen zweiten in dem ersten Zylinder angeordneten Zylinder mit mindestens einer zweiten zu der ersten Zylinderöffnung korrespondierenden Zylinderöffnung umfassen. Insbesondere können zumindest zwei erste und/oder zumindest zwei zweite Zylinderöffnungen vorgesehen sein.

Korrespondierend meint, dass eine erste Zylinderöffnung hinsichtlich Lage und Form auf mindestens eine zweite Zylinderöffnung abgestimmt sein kann, so dass eine Durchflussöffnung mit einer bestimmten Querschnittsfläche durch die erste und die zweite Zylinderöffnung gebildet werden kann.

Durch ein Verdrehen (um eine Rotationsachse, vorzugsweise die Turbinenachse) des zweiten Zylinders in Relation zu dem ersten Zylinder kann die Querschnittsfläche der mindestens einen Durchflussöffnung zwischen der maximalen Querschnittsfläche (in diesem Fall liegen die erste und die zweite Zylinderöffnung (bzw. die jeweiligen ersten und zweiten Zylinderöffnungen) im Wesentlichen übereinander) und einer minimalen Querschnittsfläche (in diesem Fall liegen die erste und die zweite Zylinderöffnung (bzw. die jeweiligen ersten und zweiten Zylinderöffnungen) im Wesentlichen nicht übereinander, insbesondere nur teilweise übereinander; auch kann vorgesehen sein, dass nur eine erste von einer Mehrzahl von Öffnungen über einer zweiten von einer Mehrzahl von Öffnungen liegt) verstellbar sein.

Der zweite Zylinder und/oder der erste Zylinder kann/können insbesondere durch einen Stellmotor verstellbar sein bzw. verfahrbar sein. Vorzugsweise kann der Stellmotor ein elektrischer Stellmotor sein. Vorzugsweise kann der mindestens eine Generator der Rohrturbinenvorrichtung den mindestens einen Stellmotor mit elektrischer Energie versorgen. Zumindest einer der Zylinder kann zumindest teilweise in der Leiteinrichtung integriert sein.

Gemäß einer weiteren nicht unter die Ansprüche fallenden Ausführungsform der Rohrturbinenvorrichtung kann die Querschnittsanpassungseinrichtung mindestens ein in Strömungsrichtung vor der Leiteinrichtung angeordnetes in Achsrichtung der Rohrturbinenvorrichtung (bzw. in Strömungsrichtung) verschiebbares Zylindermodul umfassen. Das Zylindermodul kann mindestens eine zwischen einer maximalen Querschnittsfläche und einer minimalen Querschnittsfläche verstellbare Durchflussöffnung aufweisen. Insbesondere durch eine in axialer Richtung durchführbare Schiebeaktion kann die durchströmbare Querschnittsfläche veränderbar sein. Das verschiebbare Zylindermodul kann ähnlich gebildet sein wie das verdrehbare Zylindermodul. Verschiebbar meint, dass zumindest ein Teil (erster Zylinder) des Zylindermoduls verschiebbar ist, insbesondere gegenüber einem anderen Teil (zweiter Zylinder) des Zylindermoduls. Zumindest eines dieser Teile kann in Bezug zu Turbinengehäuse unbeweglich sein.

In der vorliegenden Ausführungsform kann das verschiebbare Zylindermodul insbesondere ein zuvor beschriebenes Querschnittsanpassungsmodul sein. Vorzugsweise kann eine derartige Querschnittsanpassungseinrichtung eine aktiv betriebene Querschnittsanpassungseinrichtung sein. Insbesondere kann durch eine axiale Schiebeaktion, beispielsweise bewirkt durch einen (zuvor beschriebenen) Stellmotor, eine Änderung der mindestens einen Durchflussöffnung bewirkt werden. Die Durchflussöffnung bzw. deren Durchflussquerschnitt ist insbesondere änderbar, derart, dass die Querschnittsfläche geändert wird.

Grundsätzlich kann bei dieser Ausführungsform eine Durchflussöffnung vorliegend eine Gesamt-Durchflussöffnung meinen, die aus einer Mehrzahl von einzelnen Durchflussöffnungen gebildet sein kann.

Vorzugsweise kann das verschiebbare Zylindermodul zumindest einen ersten Zylinder mit mindestens einer ersten Zylinderöffnung und einen zweiten Zylinder in dem ersten Zylinder angeordneten Zylinder mit mindestens einer zweiten zu der ersten Zylinderöffnung korrespondierenden Zylinderöffnung umfassen. Insbesondere können zumindest zwei erste und zwei zweite Zylinderöffnungen vorgesehen sein. Korrespondierend meint, dass eine erste Zylinderöffnung hinsichtlich Lage und Form auf mindestens eine zweite Zylinderöffnung abgestimmt sein kann, so dass eine Durchflussöffnung mit einer bestimmten Querschnittsfläche durch die erste und die zweite Zylinderöffnung gebildet werden kann.

Durch ein axiales Verschieben des zweiten Zylinders in Relation zu dem ersten Zylinder kann die Querschnittsfläche der mindestens einen Durchflussöffnung zwischen der maximalen Querschnittsfläche (in diesem Fall liegen die erste und die zweite Zylinderöffnung (bzw. die jeweiligen ersten und zweiten Zylinderöffnungen) im Wesentlichen übereinander) und einer minimalen Querschnittsfläche (in diesem Fall liegen die erste und die zweite Zylinderöffnung (bzw. die jeweiligen ersten und zweiten Zylinderöffnungen) im Wesentlichen nicht übereinander, insbesondere nur teilweise übereinander; auch kann vorgesehen sein, dass nur eine erste von einer Mehrzahl von Öffnungen über einer zweiten von einer Mehrzahl von Öffnungen liegt) verstellbar sein. Der zweite Zylinder und/oder der erste Zylinder kann/können insbesondere durch einen Stellmotor verstellbar sein bzw. verfahrbar sein. Vorzugsweise kann der Stellmotor ein elektrischer Stellmotor sein. Vorzugsweise kann der mindestens eine Generator der Rohrturbinenvorrichtung den mindestens einen Stellmotor mit elektrischer Energie versorgen. Zumindest einer der Zylinder kann zumindest teilweise in der Leiteinrichtung integriert sein.

Bei den beschriebenen Zylindermodulen kann das Fluid von der jeweiligen mindestens einen (ersten oder zweiten) Zylinderöffnung zu der Leiteinrichtung strömen, insbesondere zu dem mindestens einen Düsenkanal. Bei Varianten der Anmeldung kann zumindest einer der Zylinder zumindest teilweise durch die Leiteinrichtung gebildet sein.

Wie bereits beschrieben wurde, kann die Querschnittsanpassungseinrichtung auch in der Leiteinrichtung integriert sein. Gemäß einer weiteren nicht unter die Ansprüche fallenden Ausführungsform der Rohrturbinenvorrichtung kann die Querschnittsanpassungseinrichtung durch mindestens eine verstellbare Leitschaufel der Leiteinrichtung gebildet sein. Beispielsweise können die Düsenkanäle durch verstellbare Leitschaufeln gebildet sein. Durch ein Verstellen der mindestens einen Leitschaufel kann die durchströmbare Querschnittsfläche veränderbar sein.

In der vorliegenden Ausführungsform kann die mindestens eine verstellbare Leitschaufel insbesondere ein zuvor beschriebenes Querschnittsanpassungsmodul sein. Vorzugsweise kann eine derartige Querschnittsanpassungseinrichtung eine aktiv betriebene Querschnittsanpassungseinrichtung sein. Insbesondere kann durch eine Verstellung einer Leitschaufel (insbesondere ein Verdrehen in Bezug zu einer Rotationsachse), insbesondere einer Mehrzahl von Leitschaufeln, beispielsweise bewirkt durch einen (zuvor beschriebenen) Stellmotor, eine Änderung der mindestens einen Durchflussöffnung bewirkt werden. Die Durchflussöffnung bzw. deren Durchflussquerschnitt ist insbesondere änderbar, derart, dass die durchströmbare Querschnittsfläche geändert wird.

Vorzugsweise kann die Querschnittsanpassungseinrichtung mindestens einen in Wirkverbindung mit der mindestens einen Leitschaufel der Leiteinrichtung stehenden Stellmechanismus (insbesondere in Form eines Stellrings) umfassen. Der Stellmechanismus kann insbesondere mechanisch mit den Leitschaufeln gekoppelt sein, beispielsweise über einen Zahnradmechanismus).

Vorzugsweise kann ein Stellmotor vorgesehen sein, eingerichtet zum Verstellen des Stellmechanismus, insbesondere zum Verdrehen des Stellrings. Vorzugsweise kann der Stellmotor ein elektrischer Stellmotor sein. Vorzugsweise kann der mindestens eine Generator der Rohrturbinenvorrichtung den mindestens einen Stellmotor mit elektrischer Energie versorgen.

Gemäß Erfindung umfasst die Querschnittsanpassungseinrichtung mindestens ein Plattenmodul mit mindestens einem in einer Durchflussöffnung des Plattenmoduls radial beweglich angeordneten Sperrelement. Insbesondere durch ein in radialer Richtung durchführbares Verschieben des mindestens einen Sperrelements kann die durchströmbare Querschnittsfläche veränderbar sein. Insbesondere kann hierdurch ein Nabendurchmesser verändert werden.

Das mindestens eine verstellbare Sperrelement zusammen mit dem Plattenmodul bilden das zuvor beschriebene Querschnittsanpassungsmodul. Vorzugsweise kann eine derartige Querschnittsanpassungseinrichtung eine aktiv betriebene Querschnittsanpassungseinrichtung sein. Insbesondere kann durch eine Verstellung eines Sperrelements, insbesondere einer Mehrzahl von Sperrelementen, jeweils angeordnet in einer entsprechenden Anzahl von Durchflussöffnungen des Plattenmoduls, beispielsweise bewirkt durch einen (zuvor beschriebenen) Stellmotor, eine Änderung der mindestens einen Durchflussöffnung bewirkt werden. Die mindestens eine Durchflussöffnung bzw. deren Durchflussquerschnitt ist insbesondere änderbar, derart, dass die durchströmbare Querschnittsfläche geändert wird. Die Oberfläche des Plattenmoduls kann senkrecht zur Strömungsrichtung verlaufen.

Vorzugsweise kann das mindestens eine Sperrelement mit einem von einem Stellmotor verdrehbaren Zahnradmechanismus (oder einem ähnlichen Mechanismus) in Wirkverbindung stehen. Ein Verdrehen des Zahnradmechanismus bewirkt insbesondere ein Verschieben des mindestens einen Sperrelements in radialer Richtung. Insbesondere kann eine Mehrzahl von Sperrelementen mit dem Zahnradmechanismus in Wirkverbindung stehen, so dass gleichzeitig bzw. synchron ein radiales Verschieben der Mehrzahl von Sperrelementen in den jeweiligen Durchflussöffnungen erfolgen kann. Wie beschrieben wurde, können die vorgenannten Ausführungsbeispiele insbesondere aktiv betriebene Querschnittsanpassungseinrichtungen sein. Bei Varianten der Anmeldung kann bei diesen Beispielen anstelle eines aktiven Moduls auch ein passives Modul vorgesehen sein. Es sei zudem angemerkt, dass ein Stellmotor auch grundsätzlich ein anderer Motor sein kann, wie ein Hydraulikmotor.

Gemäß einer weiteren nicht unter die Ansprüche fallenden Ausführungsform der Rohrturbinenvorrichtung kann die Querschnittsanpassungseinrichtung mindestens ein in der Leiteinrichtung angeordnetes (passives) Klappenmodul umfassen, eingerichtet zum Ändern eines Durchströmungsquerschnitts eines Düsenkanals der Leiteinrichtung. Das mindestens eine Klappenmodul kann insbesondere eine Rückstellenklappe (bzw. Rückstellventil) sein.

In der vorliegenden Ausführungsform kann das mindestens eine klappbare Klappenmodul insbesondere ein zuvor beschriebenes Querschnittsanpassungsmodul sein. Vorzugsweise kann eine derartige Querschnittsanpassungseinrichtung eine passiv betriebene Querschnittsanpassungseinrichtung sein. Das Klappenmodul kann insbesondere zwischen einem geöffneten Zustand (in dem die Durchströmungsquerschnittsfläche eines Düsenkanals im Wesentlichen der Querschnittsfläche des Düsenkanals (an der Stelle des Klappenmoduls) entspricht) und einem geschlossen Zustand (in dem der Düsenkanal zumindest nahezu verschlossen ist, vorzugsweise ganz verschlossen ist) (kontinuierlich) bewegt werden.

Vorzugsweise kann das Klappenmodul ein Rückstellelement (z.B. ein Federelement, ein hydraulischer Dämpfer (z.B. mit Stoßdämpferöl) aufweisen. Beispielsweise kann das Rückstellelement in dem Befestigungspunkt des Klappenmoduls an einer Innenwand des Düsenkanals integriert sein. Das mindestens eine Rückstellelement ist insbesondere auf die Rohrturbinenvorrichtung abgestimmt, insbesondere auf eine bestimmte Strömungssollgeschwindigkeit. Abhängig von dem augenblicklichen Volumenstrom wird (automatisch) durch das Fluid, das entsprechend dem augenblicklichen Volumenstrom eine Kraft auf das Klappenmodul ausübt, die durchströmbare Querschnittsfläche verändert. Insbesondere kann für den augenblicklichen Volumenstrom eine optimale Querschnittsfläche eingestellt werden.

Alternativ oder zusätzlich kann, gemäß einer weiteren nicht unter die Ansprüche fallenden Ausführungsform der Rohrturbinenvorrichtung, die Querschnittsanpassungseinrichtung mindestens ein vor der Leiteinrichtung angeordnetes Ventilmodul mit mindestens einer Ventilöffnung umfassen. Durch ein Ändern der Querschnittsfläche der Ventilöffnung kann insbesondere die durchströmbare Querschnittsfläche veränderbar sein.

In der vorliegenden Ausführungsform kann das mindestens eine Ventilmodul (z.B. mit einem oder mehreren Ventil(en)) insbesondere ein zuvor beschriebenes Querschnittsanpassungsmodul sein. Vorzugsweise kann eine derartige Querschnittsanpassungseinrichtung eine passiv betriebene Querschnittsanpassungseinrichtung sein. Bei Varianten der Anmeldung kann das Ventilmodul auch eine aktiv betriebene Querschnittsanpassungseinrichtung und beispielsweise mindestens ein Magnetventil bzw. ein elektromagnetisch betriebenes Ventil umfassen. Dieses kann in zuvor beschriebener Weise durch ein Regelmodul geregelt bzw. angesteuert werden.

Das Ventilmodul, insbesondere das mindestens eine Ventil, kann insbesondere zwischen einem vollständig geöffneten Zustand und einem geschlossen Zustand (kontinuierlich) verstellbar sein. Vorzugsweise kann das mindestens eine Ventil ein Rückstellelement (z.B. ein Federelement, einen hydraulischer Dämpfer (z.B. mit Stoßdämpferöl) aufweisen. Das mindestens eine Rückstellelement ist insbesondere auf die Rohrturbinenvorrichtung abgestimmt, insbesondere auf eine bestimmte Strömungssollgeschwindigkeit.

Abhängig von dem augenblicklichen Volumenstrom wird (automatisch) durch das Fluid, dass entsprechend dem augenblicklichen Volumenstrom eine Kraft auf das Ventil (insbesondere eine mit dem Rückstellelement gekoppelte Anströmfläche des Ventils) ausübt, die Ventilöffnungsquerschnittsfläche und damit die durchströmbare Querschnittsfläche verändert. Insbesondere kann für den augenblicklichen Volumenstrom eine optimale Querschnittsfläche eingestellt werden.

Bei Varianten kann ein Ventilmodul über eine Mehrzahl von Ventilen verfügen, die jeweils ein Rückstellelement mit einer unterschiedlichen Rückstellkraft aufweisen können. In diesem Fall kann abhängig vom Volumenstrom eine unterschiedliche Anzahl von Ventilen geöffnet bzw. geschlossen sein. Eine Einstellung unterschiedlicher Querschnittsflächen ist möglich.

Die Rohrturbinenvorrichtung bzw. das Turbinengehäuse kann vorzugsweise so gebildet sein, dass das Fluid am Gehäuseaustritt nahezu die gleiche Strömungsrichtung aufweist wie am Gehäuseeingang. Insbesondere kann das Turbinengehäuse eine gradlinige Fortsetzung des ersten Transportnetzrohrs und insbesondere des zweiten Transportnetzrohrs sein

Optional kann die Rohrturbinenvorrichtung einen Strömungsgleichrichter umfassen, der zwischen der Laufeinrichtung und dem Ausgang angeordnet sein kann. Wie bereits beschrieben wurde, ist der Laufeinrichtung eine Leiteinrichtung (auch als Düsenkörper bezeichnet) vorgeschaltet, die vorzugsweise als leitradartiges Teilkreissegment mit vorzugsweise einer Mehrzahl an Leitschaufeln ausgebildet sein kann. Die Leiteinrichtung kann beispielsweise aus Aluminium hergestellt sein.

Die Leitschaufeln können insbesondere einer gleichmäßigen Beschleunigung und Umlenkung des Fluids in die Laufeinrichtung dienen. Beispielsweise bilden die Leitschaufeln zwischen sich Düsenkanäle, deren Querschnitt sich in Strömungsrichtung verjüngen kann, so dass die Strömungsgeschwindigkeit des Fluids in den Düsenkanälen erhöht wird. Hierdurch kann insbesondere ein Düseneffekt zur Strömungsbeschleunigung erzielt werden. Unter einem Teilkreissegment ist vorliegend insbesondere zu verstehen, dass die Leiteinrichtung einen Kreisbogenabschnitt bildet. Die Leiteinrichtung kann beispielsweise in eine teilkreissegmentförmige Öffnung eines Generatorträgers eingesetzt sein.

Ein Generatorträger zum Halten des mindestens einen Generators kann beispielsweise als zentrale Scheibe und Montageflansch für zwei Teile des Turbinengehäuses gebildet sein. Der Generatorträger kann beispielsweise als Aluminiumscheibe mit einer Durchführung für die Turbinenwelle gebildet sein und vorzugsweise beiderseits Ringnuten zur Zentrierung der Teile des Turbinengehäuses aufweisen. Der mindestens eine Generator kann an eine Seite des Generatorträgers angeflanscht sein, so dass dieser sich quasi schwebend in einem Teil des Turbinengehäuses erstreckt.

Der mindestens eine Generator kann eine Bremse aufweisen. Insbesondere bei einer Trennung des Generators von dem Stromnetz, in das der Generator einspeist, kann die Generatorwelle und somit die Laufeinrichtung mithilfe einer Bremse stillgesetzt werden. Ein Leerlaufen des Generators kann vermieden werden. Sofern die Bremse nicht mehr mit Strom versorgt wird, kann vorzugsweise eine automatische Entkopplung des Generators vom Stromnetz erfolgen.

Ferner kann die Turbinenwelle die Welle des Generators sein, so dass die Laufeinrichtung ohne Zwischenschaltung eines Getriebes auf den Generator wirken kann.

Die Laufeinrichtung kann ein Laufrad mit sich radial erstreckenden Laufradschaufeln umfassen. Die Laufradschaufeln können sich als Laufradschaufelkranz vorzugsweise über den gesamten Außenumfang des Laufrades erstrecken. Vorzugsweise können die Laufradschaufeln beispielsweise ein u- oder v-förmiges Schaufelprofil aufweisen. Das Schaufelprofil kann symmetrisch oder asymmetrisch ausgebildet sein.

Darüber hinaus kann die Laufradbeschaufelung eines Laufrads einstufig sein. Dies meint insbesondere, dass nur ein Kranz von Laufradschaufeln vorgesehen ist. Die Laufradschaufeln können ein symmetrisches, etwa v-förmiges, Querschnittsprofil aufweisen und zwischen sich entsprechend gekrümmte Strömungskanäle bzw. Düsenkanäle bilden, die vorzugsweise von der Eintrittsseite zur Austrittseite der Laufeinrichtung einen etwa konstanten Querschnitt aufweisen.

Ein weiterer Aspekt der Erfindung ist ein Verfahren zum Betreiben einer Rohrturbinenvorrichtung nach Anspruch 9.

Ein weiterer Aspekt der Erfindung ist ein Fluiddruckentspannungssystem für ein Fluidtransportnetz nach Anspruch 10.

Wie bereits beschrieben wurde, kann das Fluidtransportnetz ein Gastransportnetz sein.

Mindestens ein Transportnetzrohr bzw. eine Transportnetzleitung kann zumindest überwiegend unterirdisch verlegt sein.

Bei erdverlegten bzw. unterirdisch verlegten Gasleitungen kann bei einer üblichen Verlegungstiefe im Erdreich ganzjährig eine Temperatur zwischen 8°C und 10°C herrschen. Die Gastemperatur entspricht in der Regel der umgebenden Erdtemperatur. Bei einer Variante kann eine Mehrzahl von Rohrturbinenvorrichtung hintereinander geschaltet sein. Bei einer Hintereinanderschaltung bzw. Kaskadierung mehrerer Fluiddruckentspannungsanlagen (auch als Expansionsmaschinen bezeichnet), kann sich bei einem entsprechenden Abstand der Fluiddruckentspannungsanlagen das gasförmige Medium zwischen den einzelnen Fluiddruckentspannungsanlagen unter Ausnutzung des Erdwärmepotentials wieder erwärmen. Hierdurch kann mit Hilfe der Druckdifferenz die innere Energie des Gases und gleichzeitig das Erdwärmepotential genutzt werden.

Vorzugsweise kann der Abstand zwischen zwei benachbarten Fluiddruckentspannungsanlagen eines Fluiddruckentspannungssystems im Fluidtransportnetz so gewählt sein, dass die Temperatur des Gases nach einer ersten Entspannung und unmittelbar vor einer weiteren Entspannung zwischen 8°C und 10°C beträgt.

Eine weitere Anwendung des Fluiddruckentspannungssystems ist eine Anwendung in einem "Gas to Power" Transportnetz: Strom aus Windturbinen und/oder Photovoltaikanlagen wird zur Verdichtung von Gasen genutzt. Bei Bedarf kann die hierdurch gespeicherte Energie (später) über die anmeldungsgemäße (Inline-) Rohrturbine wieder verstromt werden

Ein noch weiterer Aspekt der Erfindung ist eine Verwendung nach Anspruch 11 einer zuvor beschriebenen Rohrturbinenvorrichtung zur Durchführung einer Fluiddruckentspannung von einem ersten Fluiddruckniveau auf ein zweites Fluiddruckniveau in einem Fluidtransportnetz, wobei durch den Generator mechanische Energie in elektrische Energie gewandelt wird.

Es sei angemerkt, dass ein Modul, eine Einrichtung etc. vorliegend zumindest teilweise durch Softwareelemente (insbesondere in Form von durch einen Prozessor ausführbarem Computercode) und/oder zumindest teilweise durch Hardwareelemente (Prozessor, Speichermittel, Aktor etc.) gebildet sein können. Ferner sei angemerkt, dass Ausdrücke, wie "erster", "zweiter" etc. keine Reihenfolge angeben, sondern lediglich der Unterscheidung zweier Elemente dienen.

Es gibt nun eine Vielzahl von Möglichkeiten, die erfindungsgemäße Rohrturbinenvorrichtung, das erfindungsgemäße Fluiddruckentspannungssystem, das erfindungsgemäße Verfahren und die erfindungsgemäße Verwendung auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:

Fig. 1  eine schematische Ansicht eines Ausführungsbeispiels einer Rohrturbinenvorrichtung (mit einem Generator stromaufwärts der Leiteinrichtung),

Fig. 2  eine schematische Ansicht eines weiteren Ausführungsbeispiels einer Rohrturbinenvorrichtung (mit einem Generator stromabwärts der Laufeinrichtung),

Fig. 3  eine schematische Ansicht eines weiteren Ausführungsbeispiels einer Rohrturbinenvorrichtung (mit zwei Generatoren (einem stromaufwärts der Leiteinrichtung und einem stromabwärts der Laufeinrichtung),

Fig. 4a  eine schematische (Schnitt-) Ansicht eines nicht unter die Ansprüche fallenden Ausführungsbeispiels (insbesondere eine Stellscheibe) einer Rohrturbinenvorrichtung,

Fig. 4b    eine weitere schematische Schnitt-Ansicht des Ausführungsbeispiels nach Figur 4a,

Fig. 5a    eine schematische (Schnitt-) Ansicht eines nicht unter die Ansprüche fallenden Ausführungsbeispiels (insbesondere ein Hülsenmodul mit radialer Stellbewegung) einer Rohrturbinenvorrichtung,

Fig. 5b    eine weitere schematische Schnitt-Ansicht des Ausführungsbeispiels nach Figur 5a,

Fig. 6a    eine schematische (Schnitt-) Ansicht eines nicht unter die Ansprüche fallenden Ausführungsbeispiels (insbesondere ein Hülsenmodul, axiale Stellbewegung) einer Rohrturbinenvorrichtung,

Fig. 6b    eine Prinzipdarstellung des Ausführungsbeispiels nach Figur 6a,

Fig. 7a    eine schematische (Schnitt-) Ansicht eines nicht unter die Ansprüche fallenden Ausführungsbeispiels (insbesondere eine verstellbare Leitschaufel) einer Rohrturbinenvorrichtung,

Fig. 7b    eine weitere schematische Schnitt-Ansicht des Ausführungsbeispiels nach Figur 7a,

Fig. 7c    eine Prinzipdarstellung des Ausführungsbeispiels nach Figur 7a,

Fig. 8a    eine schematische (Schnitt-) Ansicht eines Ausführungsbeispiels (insbesondere ein Plattenmodul) einer Rohrturbinenvorrichtung gemäß der vorliegenden Erfindung,

Fig. 8b    eine weitere schematische Schnitt-Ansicht des Ausführungsbeispiels nach Figur 8a,

Fig. 8c    eine weitere schematische Schnitt-Ansicht des Ausführungsbeispiels nach Figur 8a,

Fig. 9    eine schematische Ansicht eines nicht unter die Ansprüche fallenden Ausführungsbeispiels (insbesondere ein Ventilmodul) einer Rohrturbinenvorrichtung,

Fig. 10a    eine schematische (Schnitt-) Ansicht eines nicht unter die Ansprüche fallenden Ausführungsbeispiels (insbesondere ein Klappenmodul) einer Rohrturbinenvorrichtung,

Fig. 10b    eine weitere schematische Schnitt-Ansicht des Ausführungsbeispiels nach Figur 10a,

Fig. 11    eine schematische Ansicht eines Ausführungsbeispiels eines Fluidruckentspannungssystem gemäß der vorliegenden Erfindung, und

Fig. 12    ein Diagramm eines Ausführungsbeispiels eines Verfahrens gemäß der vorliegenden Erfindung.

Ähnliche Bezugszeichen werden nachfolgend für ähnliche Elemente verwendet. Ferner wird bei den nachfolgenden Ausführungsbeispielen stets von einem gasförmigen Medium bzw. Gas als Fluid ausgegangen. Es versteht sich, dass die Ausführungen auf andere flüssige Medien übertragbar sind.

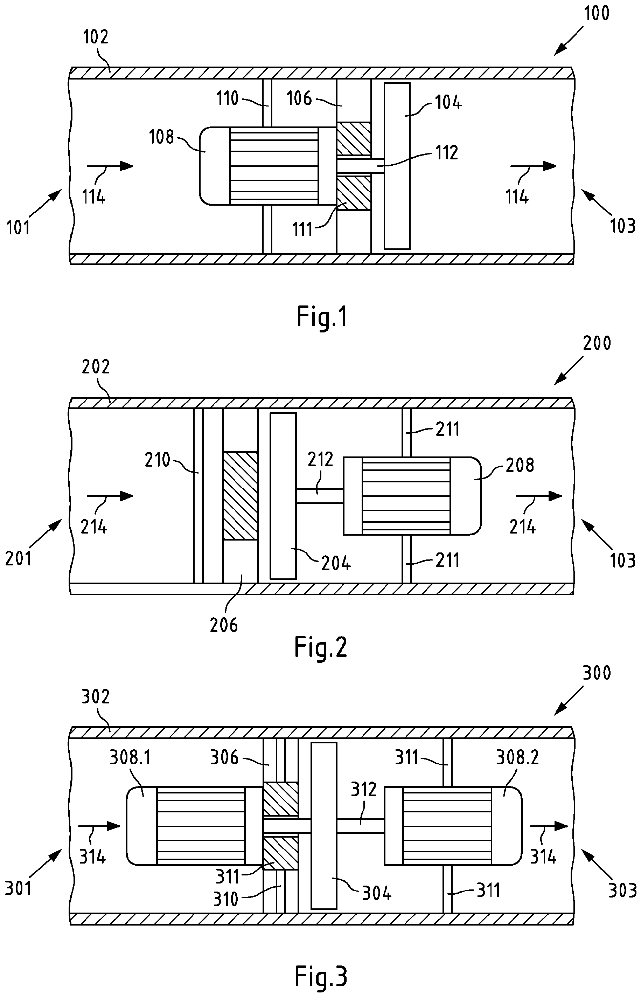

Die Figur 1 zeigt eine schematische Ansicht eines Ausführungsbeispiels einer Rohrturbinenvorrichtung 100. Die
Rohrturbinenvorrichtung 100 wird verwendet zur Durchführung einer Fluidruckentspannung von einem ersten Fluidruckniveau auf ein zweites Fluidruckniveau in einem Fluidtransportnetz, wobei gleichzeitig durch einen Generator 108 der Rohrturbinenvorrichtung 100 mechanische Energie in elektrische Energie gewandelt wird.
Die Rohrturbinenvorrichtung 100 umfasst ein Turbinengehäuse 102 (z.B. aus Stahl oder einem anderen Metall). Das Turbinengehäuse 102 ist insbesondere im Wesentlichen rohrförmig. Das Turbinengehäuse 102 weist einen Eingang 101 und einen Ausgang 103 auf. Der Pfeil 114 zeigt in dem vorliegenden Ausführungsbeispiel die Strömungsrichtung des Fluids. Wie zu erkennen ist, strömt das Fluid durch das Gehäuse 102 von dem Eingang 101 zu dem Ausgang 103 im Wesentlichen ohne eine Richtungsänderung.
Die dargestellte Rohrturbinenvorrichtung 100 für ein Fluidtransportnetz umfasst mindestens eine auf einer Turbinenwelle 112 angeordnete Laufeinrichtung 104. Die Laufeinrichtung 104 kann insbesondere ein Laufrad mit einer Mehrzahl von Laufradschaufeln umfassen.
Ferner umfasst die Rohrturbinenvorrichtung 100 mindestens eine in Strömungsrichtung 114 vor der Laufeinrichtung 104 angeordnete Leiteinrichtung 106. Die Leiteinrichtung 106 kann insbesondere eine Mehrzahl von Düsenkanälen aufweisen, welche insbesondere dem Gas einen Drall entsprechend der Beschaufelung des Laufrads 104 aufprägen und es vorzugsweise beschleunigen.

Die Rohrturbinenvorrichtung 100 umfasst mindestens einen mit der Turbinenwelle 112 gekoppelten Generator 108, eingerichtet zum Wandeln der mechanischen Energie in elektrische Energie. Insbesondere wird die Bewegungsenergie des durch die Rohrturbinenvorrichtung 100 strömenden Gases durch Laufeinrichtung 104, Turbinenwelle 112 und Generator 108 in elektrische Energie gewandelt. Die erzeugte elektrische Energie kann insbesondere in ein elektrisches Netz eingespeist werden.

Wie zu erkennen ist, ist in dem vorliegenden Ausführungsbeispiel der Generator 108 vor der Leiteinrichtung 106 angeordnet. Wie bereits beschrieben wurde, kann der Generator 108 "schwebend" in dem Turbinengehäuse 102 durch einen Generatorträger 111 gehalten bzw. gelagert sein. Die Leiteinrichtung 106 ist in diesem Ausführungsbeispiel in den Generatorträger 111 integriert.

Die Rohrturbinenvorrichtung 100 umfasst ferner mindestens eine Querschnittsanpassungseinrichtung 110. Die Querschnittsanpassungseinrichtung 110 ist eingerichtet zum Ändern einer durchströmbaren Querschnittsfläche (vorliegend beispielhaft eine Eingangsquerschnittsfläche) der Rohrturbinenvorrichtung 100 abhängig von dem Volumenstrom des die Rohrturbinenvorrichtung 100 durchströmenden Fluids, vorliegend ein Gas. Hierfür weist die Querschnittsanpassungseinrichtung 110 ein Querschnittsanpassungsmodul auf.

Insbesondere kann die Querschnittsfläche, abhängig von dem augenblicklichen Gasvolumenstroms vergrößert werden (bis zu einer maximal möglichen Querschnittsfläche) und/oder verringert werden (bis zu einer minimal möglichen Querschnittsfläche). Vorzugsweise ist ein kontinuierliches Ändern bzw. Anpassen der Querschnittsfläche möglich. Auch ist eine diskrete Anpassung möglich. Durch eine Anpassung der Querschnittsfläche kann die Rohrturbinenvorrichtung 100 in einem optimierten Arbeitspunkt betrieben werden. Der elektrische Energieertrag kann optimiert/maximiert werden.

Wie ferner aus der Figur 1 zu erkennen ist, ist die Querschnittsanpassungseinrichtung 110 vorliegend vor der Leiteinrichtung 106 angeordnet.

Die Figur 2 zeigt eine schematische Ansicht eines weiteren Ausführungsbeispiels einer Rohrturbinenvorrichtung 200. Zur Vermeidung von Wiederholungen werden nachfolgend im Wesentlichen nur die Unterschiede zu dem vorherigen Ausführungsbeispiel nach Figur 1 beschrieben und ansonsten auf die Ausführungen zu diesem Ausführungsbeispiel verwiesen.

Wie zu erkennen ist, ist der Generator 208 im vorliegenden Ausführungsbeispiel in Strömungsrichtung 214 hinter der Laufeinrichtung 204 angeordnet und insbesondere mittels Stützmittel 211 in dem Turbinengehäuse 202 gehalten.

Die Figur 3 zeigt eine schematische Ansicht eines weiteren Ausführungsbeispiels einer Rohrturbinenvorrichtung 300. Zur Vermeidung von Wiederholungen werden nachfolgend im Wesentlichen nur die Unterschiede zu den vorherigen Ausführungsbeispielen nach Figur 1 und 2 beschrieben und ansonsten auf die Ausführungen zu diesen Ausführungsbeispielen verwiesen.

Wie zu erkennen ist, sind vorliegend zwei Generatoren 308.1, 308.2 vorgesehen. Ein erster Generator 308.1 ist in Strömungsrichtung 314 vor der Laufeinrichtung 304 angeordnet und der weitere Generator 308.2 ist in Strömungsrichtung 314 hinter der Laufeinrichtung 304 angeordnet. Im Vergleich zu den vorherigen Ausführungsbeispielen können die Generatoren 308.1, 308.2 (und das Gehäuse) für eine vergleichbare Gesamtleistung einen geringeren Querschnitt aufweisen.

Die Querschnittsanpassungseinrichtung 310 ist hier (exemplarisch) in den Generatorträger 311 für Generator 308.1 und die Leiteinrichtung 306 integriert.

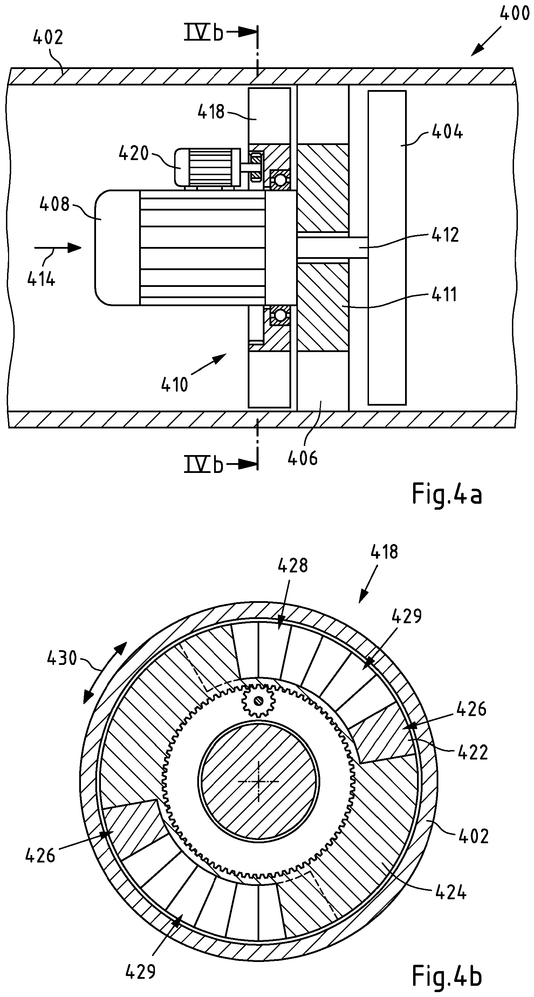

Die Figuren 4a und 4b zeigen schematische Ansichten eines nicht unter die Ansprüche fallenden Ausführungsbeispiels einer Rohrturbinenvorrichtung 400.

Zur Vermeidung von Wiederholungen werden nachfolgend im Wesentlichen nur die Unterschiede zu den vorherigen Ausführungsbeispielen nach Figuren 1 bis 3 beschrieben und ansonsten auf die Ausführungen zu diesen Ausführungsbeispielen verwiesen. Die Figur 4a zeigt eine erste Schnittansicht der Rohrturbinenvorrichtung 400 und die Figur 4b eine Schnittansicht in der gekennzeichneten Ebene.

Wie zunächst zu erkennen ist, ist die Querschnittsanpassungseinrichtung 410 vor der Leiteinrichtung 406 angeordnet. Vorliegend umfasst die Querschnittsanpassungseinrichtung 410 ein Drehscheibenmodul 418 und einen (elektrischen oder hydraulischen) Stellmotor 420. Vorliegend ist der Stellmotor 420 beispielhaft auf dem Generator 408 angeordnet und insbesondere an dem Generatorgehäuse befestigt.

Das Drehscheibenmodul 418 weist in dem vorliegenden Ausführungsbeispiel eine zentrale Generatoröffnung auf, durch die der Generator, der an dem Generatorträger 411 befestigt ist, hindurchragt. Wenn nur ein Generator hinter der Laufeinrichtung 404 vorgesehen ist, kann auf eine Generatoröffnung verzichtet werden.

Das Drehscheibenmodul 418 ist vorliegend aus zwei übereinanderliegenden Scheiben 422, 424 gebildet, also einer ersten Scheibe 422 und einer zweiten Scheibe 424. Die erste Scheibe 422 ist in Relation zu der zweiten Scheibe 424 verdrehbar. Insbesondere kann eine der Scheiben 422, 424 mit dem Stellmotor 420 (mechanisch) gekoppelt sein, derart, dass eine Verdrehung der ersten Scheibe 422 zu der zweiten Scheibe 424 bewirkt wird.

Wie zu erkennen ist, weist die erste Scheibe 422 mindestens eine erste Scheibenöffnung 426 auf, vorliegend beispielhaft zwei erste Scheibenöffnungen 426. Ferner weist die zweite Scheibe 424 mindestens eine zweite Scheibenöffnung 428 auf, vorliegend beispielhaft zwei zweite Scheibenöffnungen 428. Die mindestens eine erste Scheibenöffnung 426 korrespondiert insbesondere zu der mindestens einen zweiten Scheibenöffnung 428. Insbesondere kann die Öffnungsform der jeweiligen Scheibenöffnungen im Wesentlichen gleich sein.

Durch ein Verdrehen (angedeutet durch den mit dem Bezugszeichen 430 gekennzeichneten Pfeil in Figur 4b) kann die mindestens eine Durchflussöffnung 429 und damit die Querschnittsfläche geändert werden. So kann durch ein Verdrehen der zweiten Scheibe 424 in Relation zu der ersten Scheibe 422 die Querschnittsfläche der mindestens einen Durchflussöffnung 429 (vorliegend gebildet durch zwei Durchflussöffnungen 429) zwischen der maximalen Querschnittsfläche (in diesem Fall können die jeweiligen ersten und zweiten Scheibenöffnungen 426, 428 im Wesentlichen übereinander liegen) und einer minimalen Querschnittsfläche (in diesem Fall liegen die jeweiligen ersten und zweiten Scheibenöffnungen 426, 428 im Wesentlichen nicht übereinander) verstellbar sein.

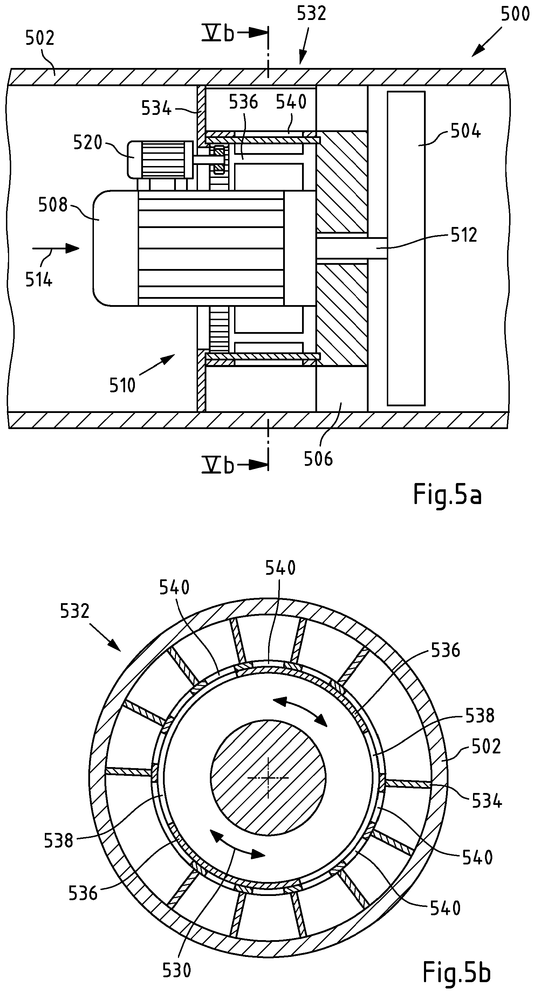

Die Figuren 5a und 5b zeigen schematische Ansichten eines nicht unter die Ansprüche fallenden Ausführungsbeispiels einer Rohrturbinenvorrichtung 500.

Zur Vermeidung von Wiederholungen werden nachfolgend im Wesentlichen nur die Unterschiede zu den vorherigen Ausführungsbeispielen nach Figuren 1 bis 4b beschrieben und ansonsten auf die Ausführungen zu diesen Ausführungsbeispielen verwiesen. Die Figur 5a zeigt eine erste Schnittansicht der Rohrturbinenvorrichtung 500 und die Figur 5b eine Schnittansicht in der gekennzeichneten Ebene.

Die dargestellte Querschnittsanpassungseinrichtung 510 kann mindestens ein in Strömungsrichtung 514 vor der Leiteinrichtung 506 angeordnetes drehbares Zylindermodul 532 umfassen. Das Zylindermodul 532 kann mindestens eine zwischen einer maximalen Querschnittsfläche und einer minimalen Querschnittsfläche verstellbare Durchflussöffnung aufweisen. In dem vorliegenden Ausführungsbeispiel kann das drehbare Zylindermodul 532 insbesondere ein zuvor beschriebenes Querschnittsanpassungsmodul sein.

Das Zylindermodul 532 weist in dem vorliegenden Ausführungsbeispiel eine zentrale Generatoröffnung auf, durch die der Generator, der an der Leiteinrichtung 506 befestigt ist, hindurchragt. Wenn nur ein Generator hinter der Laufeinrichtung 504 vorgesehen ist, kann auf eine Generatoröffnung verzichtet werden.

Vorzugsweise kann eine derartige Querschnittsanpassungseinrichtung eine aktiv betriebene Querschnittsanpassungseinrichtung sein. Vorliegend ist insbesondere ein Stellmotor 520 (vgl. Fig. 4) vorgesehen.

Bevorzugt kann das drehbare Zylindermodul 532 zumindest einen ersten Zylinder 534 (bzw. Hülsenelement) mit mindestens einer ersten Zylinderöffnung 540 umfassen, vorzugsweise eine Vielzahl von ersten Zylinderöffnungen 540. Ferner umfasst das drehbare Zylindermodul 532 einen zweiten in dem ersten Zylinder 534 angeordneten Zylinder 536 (bzw. Hülsenelement) mit mindestens einer zweiten zu der ersten Zylinderöffnung 540 korrespondierenden Zylinderöffnung 538. Insbesondere sind zwei zweite Zylinderöffnungen 538 vorgesehen.

Der Stellmotor 520 kann mit dem zweiten Zylinder 536 derart (mechanisch) gekoppelt sein, dass dieser gegenüber dem ersten Zylinder 534 verdrehbar ist. Wie aus den Figuren 5a und 5b zu erkennen ist, kann durch ein Verdrehen (angedeutet durch den mit dem Bezugszeichen 530 gekennzeichneten Pfeil) des zweiten Zylinders 536 in Relation zu dem ersten Zylinder 534 die Querschnittsfläche der Gesamt-Durchflussöffnung (gebildet aus einer Mehrzahl von Durchflussöffnungen) geändert werden.

Die Durchflussöffnungen sind dadurch gebildet, dass eine zweite Zylinderöffnung 538 über mindestens einer ersten Zylinderöffnung 540 liegt. Auch hier kann die Gesamt-Durchflussöffnung und damit die Querschnittsfläche zwischen einer maximalen Querschnittsfläche (in diesem Fall liegen die jeweiligen ersten und zweiten Zylinderöffnungen 538, 540 im Wesentlichen übereinander) und einer minimalen Querschnittsfläche (in diesem Fall liegen die jeweiligen ersten und zweiten Zylinderöffnungen 538, 540 im Wesentlichen nicht übereinander, insbesondere nur teilweise übereinander) verstellbar bzw. änderbar sein.

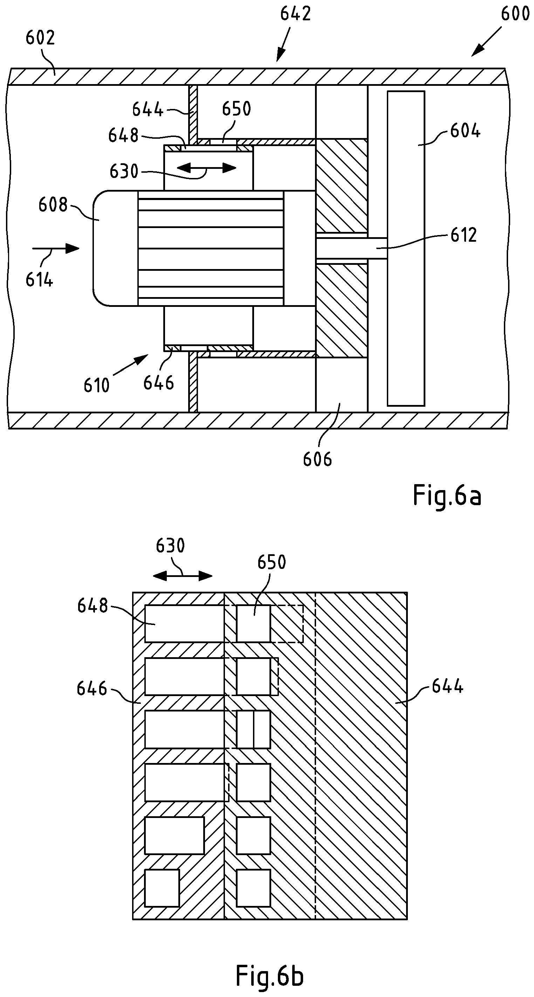

Die Figuren 6a und 6b zeigen schematische Ansichten eines nicht unter die Ansprüche fallenden Ausführungsbeispiels einer Rohrturbinenvorrichtung 600.

Zur Vermeidung von Wiederholungen werden nachfolgend im Wesentlichen nur die Unterschiede zu den vorherigen Ausführungsbeispielen nach Figuren 1 bis 5b beschrieben und ansonsten auf die Ausführungen zu diesen Ausführungsbeispielen verwiesen. Die Figur 6a zeigt eine erste Schnittansicht der Rohrturbinenvorrichtung 600 und die Figur 6b eine prinzipielle Schnittansicht.

Im Unterschied zu dem Ausführungsbeispiel nach Figur 5a und 5b ist das vorliegende Zylindermodul 642 der Querschnittsanpassungseinrichtung 610 in axialer Richtung (angedeutet mit dem durch das Bezugszeichen 630 gekennzeichneten Pfeil) bewegbar bzw. verschiebbar, insbesondere zwischen einer maximalen und minimalen axialen Position. Insbesondere kann ein zweiter Zylinder 646 in Relation zu einem ersten Zylinder 644 axial verschoben werden. Beispielsweise kann der zweite Zylinder 646 mit einem Stellmotor gekoppelt sein, so dass ein axiales Bewegen des zweiten Zylinders bewirkt werden kann.

Wie ferner zu erkennen ist, kann durch ein axiales Verschieben des zweiten Zylinders 646 in Relation zu dem ersten Zylinder 644 die Gesamt-Durchflussöffnung (gebildet aus einer Mehrzahl von Durchflussöffnungen) geändert werden. Die Durchflussöffnungen sind dadurch gebildet, dass eine zweite Zylinderöffnung 648 über mindestens einer ersten Zylinderöffnung 650 liegt, so dass das Gas durch die entsprechenden Zylinderöffnungen zu der Leiteinrichtung 606 strömen kann.

Auch hier kann die Gesamt-Durchflussöffnung und damit die Querschnittsfläche zwischen einer maximalen Querschnittsfläche (in diesem Fall liegen die jeweiligen ersten und zweiten Zylinderöffnungen 648, 650 im Wesentlichen übereinander) und einer minimalen Querschnittsfläche (in diesem Fall liegen die jeweiligen ersten und zweiten Zylinderöffnungen 648, 650 im Wesentlichen nicht übereinander, insbesondere nur teilweise übereinander) verstellbar bzw. änderbar sein.

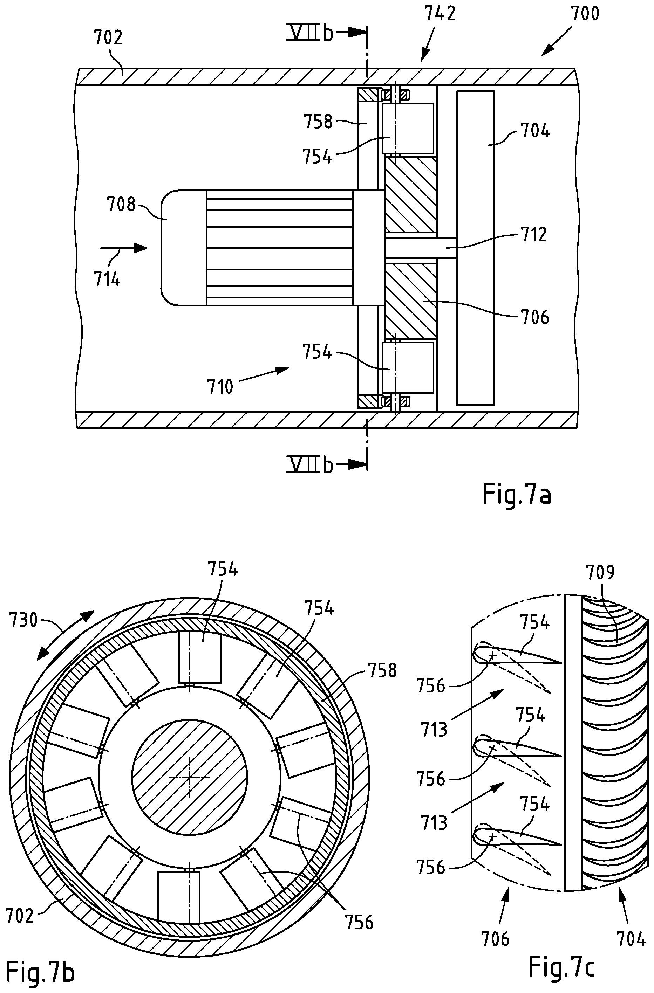

Die Figuren 7a, 7b und 7c zeigen schematische Ansichten eines nicht unter die Ansprüche fallenden Ausführungsbeispiels einer Rohrturbinenvorrichtung 700 (insbesondere ist zu Gunsten einer besseren Übersicht nur ein Ausschnitt dargestellt).

Zur Vermeidung von Wiederholungen werden nachfolgend im Wesentlichen nur die Unterschiede zu den vorherigen Ausführungsbeispielen nach Figuren 1 bis 6b beschrieben und ansonsten auf die Ausführungen zu diesen Ausführungsbeispielen verwiesen. Die Figur 7a zeigt eine erste Schnittansicht der Rohrturbinenvorrichtung 700, die Figur 7b eine Schnittansicht in der gekennzeichneten Ebene und Fig. 7c eine Prinzipdarstellung.

In dem vorliegenden Ausführungsbeispiel sind die Leiteinrichtung 706 und die Laufeinrichtung 704 beispielhaft näher dargestellt. Wie zu erkennen ist, weist die Laufeinrichtung 704 eine Mehrzahl an Laufradschaufeln 709 auf, die an einem Laufrad der Laufeinrichtung 704 angeordnet sind.

Die Leiteinrichtung 706 weist eine Mehrzahl von Düsenkanälen 713 auf. Diese werden in dem vorliegenden Ausführungsbeispiel durch eine Mehrzahl von Leitschaufeln 754 gebildet.

In dem vorliegenden Ausführungsbeispiel ist die Querschnittsanpassungseinrichtung 710 zumindest teilweise in der Leiteinrichtung 706 integriert, insbesondere durch die verstellbar ausgebildeten Leitschaufeln 754. Zudem umfasst die

Querschnittsanpassungseinrichtung 710 einen von einem Stellmotor verstellbaren Stellmechanismus, vorliegend in Form eines Stellrings 758.

Eine Leitschaufel 754 ist insbesondere um eine Rotationsachse 756 drehbar. Um eine Leitschaufel 754, insbesondere sämtliche Leitschaufeln 754, in synchroner Weise, zu verdrehen, ist jede Leitschaufel 754 mit dem drehbaren Stellring (mechanisch) gekoppelt, derart, dass eine Verdrehung (angedeutet durch den mit dem Bezugszeichen 730 gekennzeichneten Pfeil) des Stellrings 758 zu einer (entsprechenden) Verdrehung von sämtlichen Leitschaufeln 754 führt. Beispielsweise wird die Kopplung durch einen Zahnradmechanismus realisiert.

Die Figur 7c zeigt die Leitschaufeln 754 in zwei verschiedenen Stellungen (durchgezogene Darstellung und gestrichelte Darstellung). Insbesondere ist aus der Figur 7c ersichtlich, dass ein Verdrehen bzw. ein Verstellen der mindestens einen Leitschaufel 754 die durchströmbare Querschnittsfläche, insbesondere gebildet durch die jeweiligen einstellbaren Querschnitte der Düsenkanäle 713, veränderbar ist. In dem vorliegenden Ausführungsbeispiel kann die mindestens eine verstellbare Leitschaufel 754 insbesondere ein zuvor beschriebenes Querschnittsanpassungsmodul 754 sein.

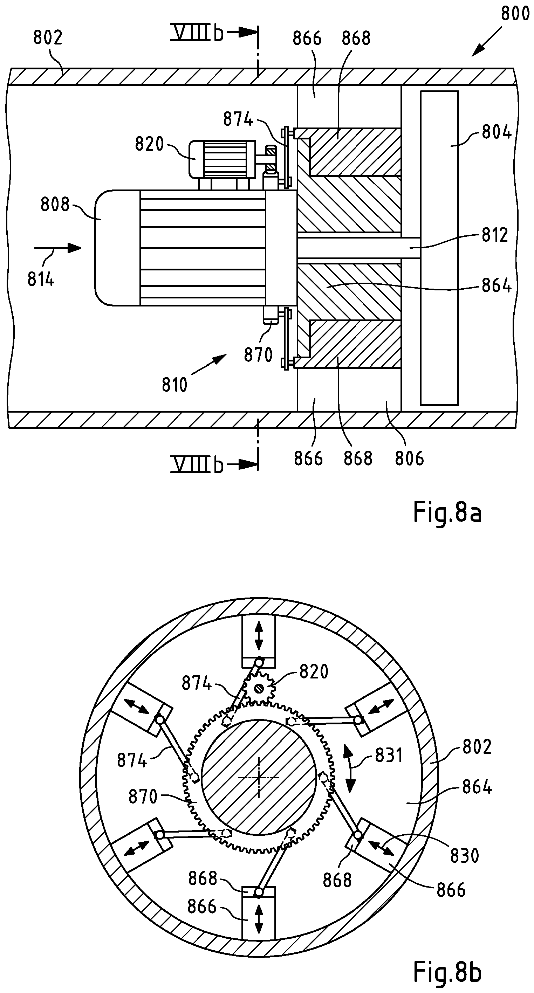

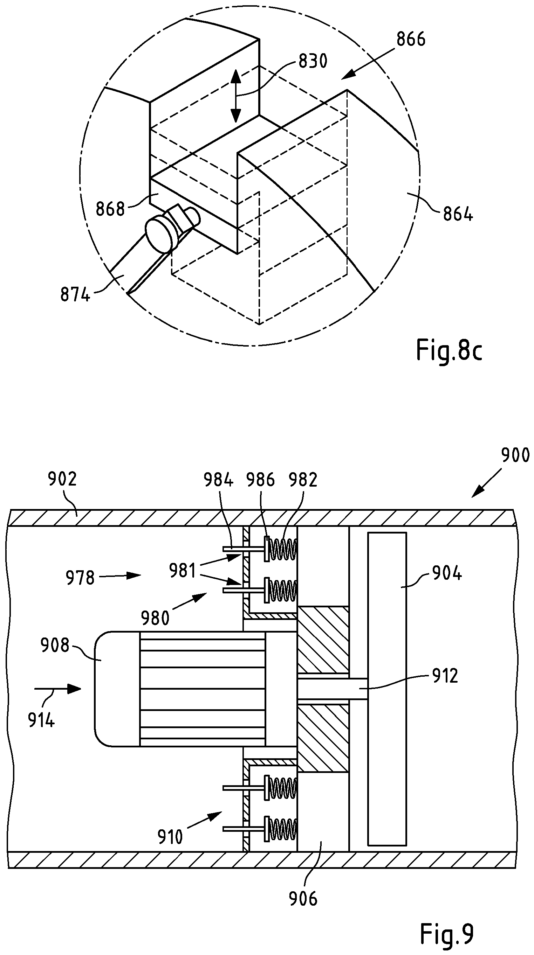

Die Figuren 8a, 8b und 8c zeigen schematische Ansichten eines Ausführungsbeispiels einer Rohrturbinenvorrichtung 800 (insbesondere ist zu Gunsten einer besseren Übersicht nur ein Ausschnitt dargestellt) gemäß der vorliegenden Erfindung.

Zur Vermeidung von Wiederholungen werden nachfolgend im Wesentlichen nur die Unterschiede zu den vorherigen Ausführungsbeispielen nach Figuren 1 bis 7c beschrieben und ansonsten auf die Ausführungen zu diesen Ausführungsbeispielen verwiesen.

Die Figur 8a zeigt eine erste Schnittansicht der Rohrturbinenvorrichtung 800, Figur 8b eine weitere Schnittansicht der Rohrturbinenvorrichtung 800 und Figur 8c eine vergrößerte perspektivische Ansicht eines in einer Durchflussöffnung 866 des Plattenmoduls 864 radial beweglich angeordneten Sperrelements 868 der Querschnittsanpassungseinrichtung 810.

Wie zu erkennen ist, stellt ein Plattenmodul 864 die Leiteinrichtung 806 dar. Anders ausgedrückt, wird die Leiteinrichtung vorliegend durch das Plattenmodul gebildet. Das Plattenmodul 864 umfasst mindestens eine Durchflussöffnung 866, vorliegend eine Mehrzahl von Durchflussöffnungen 866. Eine Durchflussöffnung 866 entspricht einem Düsenkanal der Leiteinrichtung 806.

In insbesondere jeder Düsenöffnung 866 ist ein radial bewegliches Sperrelement 868 angeordnet. Die radiale Beweglichkeit zwischen einer maximalen radialen Position und einer (in Figur 8a-c dargestellten) minimalen Position ist durch den mit dem Bezugszeichen 830 gekennzeichneten Pfeil angedeutet.

Neben dem Plattenmodul 864 mit den Düsenöffnungen 866 umfasst die Querschnittsanpassungseinrichtung 810 vorliegend einen Zahnradmechanismus 870, der mit den jeweiligen Sperrelementen 868 über Verbindungselemente 874 (mechanisch) gekoppelt ist.

Durch die Verbindungselemente 874 kann das mindestens eine Sperrelement 868 mit dem von dem Stellmotor 820 verdrehbaren (angedeutet durch den mit dem Bezugszeichen 831 gekennzeichneten Pfeil) Zahnradmechanismus 870 (oder einem ähnlichen Mechanismus) in Wirkverbindung stehen.

Ein Verdrehen des Zahnradmechanismus 870 bewirkt insbesondere ein Verschieben des mindestens einen Sperrelements 868 in radialer Richtung 830. Insbesondere kann eine Mehrzahl von Sperrelementen 868 mit dem Zahnradmechanismus 870 in Wirkverbindung stehen, so dass gleichzeitig bzw. synchron ein radiales Verschieben der Mehrzahl von Sperrelementen 868 in den jeweiligen Durchflussöffnungen 866 erfolgen kann.

Bei Varianten der Anmeldung kann das Plattenmodul auch durch die Leiteinrichtung gebildet sein und die radial beweglichen Sperrelemente in Durchflussöffnungen der Leiteinrichtung beweglich angeordnet sein.

Die Figur 9 zeigt eine schematische Ansicht eines nicht unter die Ansprüche fallenden Ausführungsbeispiels einer Rohrturbinenvorrichtung 900.

Zur Vermeidung von Wiederholungen werden nachfolgend im Wesentlichen nur die Unterschiede zu den vorherigen Ausführungsbeispielen nach Figuren 1 bis 8c beschrieben und ansonsten auf die Ausführungen zu diesen Ausführungsbeispielen verwiesen.

In dem dargestellten Ausführungsbeispiel ist die Querschnittsanpassungseinrichtung 910 vor der Leiteinrichtung 906 angeordnet. Vorzugsweise ist die Querschnittsanpassungseinrichtung 910 eine passive betreibbare Querschnittsanpassungseinrichtung 910. Insbesondere als Querschnittsanpassungsmodul 978 ist ein Ventilmodul 978 vorgesehen. Das Ventilmodul 978 weist mindestens ein Ventil 980 auf, vorliegend eine Mehrzahl von Ventilen 980.

Jedes Ventil 980 weist eine Ventilöffnung 982 auf, welche insbesondere zwischen einem vollständig geschlossenen (minimalen) Zustand und einem vollständig geöffneten (maximalen) Zustand (kontinuierlich) verstellbar ist. Hierzu weist vorliegend jedes Ventil 980 ein Rückstellelement 982 auf, vorliegend in Form eines Federelements 982.

Es versteht sich, dass auch ein ölbasiertes Dämpfungselement oder dergleichen vorgesehen sein kann. Bei vollständiger Öffnung besitzt ein Strömungskanal seinen maximal möglichen Strömungsquerschnitt.

Die einzelnen Ventile 980 eines Ventilmoduls 978 können unterschiedlich dimensionierte Rückstellelemente 982 besitzen, sodass unterschiedliche Öffnungszeitpunkte abhängig vom (augenblicklichen) Volumenstrom möglich sind.

Ein Ende des Rückstellelements 982 kann an der Leiteinrichtung 906 befestigt sein und an dem weiteren Ende des Rückstellelements 982 kann eine Anströmfläche 986 angeordnet sein.

Das Gas strömt in Strömungsrichtung 914 und trifft insbesondere auf die Anströmfläche 986. Abhängig vom (augenblicklichen) Volumenstrom wird eine entsprechende Kraft durch das Gas auf die Anströmfläche 986 ausgeübt und insbesondere die jeweilige Ventilöffnung 982 bzw. Ventilöffnungsquerschnittsfläche 982 entsprechend eingestellt. Mit anderen Worten, die Querschnittsfläche wird abhängig von dem (augenblicklichen) Volumenstrom (passiv) verändert.

Bei anderen Varianten können auch andere Arten von Ventilen zum Einsatz kommen, wie (aktive) Magnetventile.

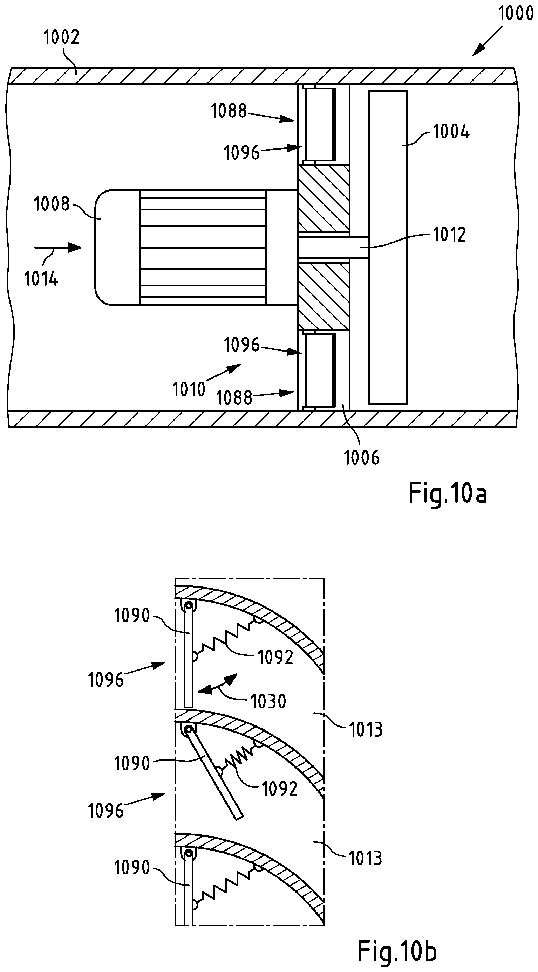

Die Figuren 10a und 10b zeigen schematische Ansichten eines nicht unter die Ansprüche fallenden

Ausführungsbeispiels einer Rohrturbinenvorrichtung 1000 (insbesondere ist zu Gunsten einer besseren Übersicht nur ein Ausschnitt dargestellt). Zur Vermeidung von Wiederholungen werden nachfolgend im Wesentlichen nur die Unterschiede zu den vorherigen Ausführungsbeispielen nach Figuren 1 bis 9 beschrieben und ansonsten auf die Ausführungen zu diesen Ausführungsbeispielen verwiesen. Die Figur 10a zeigt eine erste Schnittansicht der Rohrturbinenvorrichtung 1000 und die Figur 10b eine prinzipielle Schnittansicht.

In dem dargestellten Ausführungsbeispiel ist die Querschnittsanpassungseinrichtung 1010 in der Leiteinrichtung 1006 angeordnet. Vorzugsweise ist die Querschnittsanpassungseinrichtung 1010 eine passiv betreibbare Querschnittsanpassungseinrichtung 1010. Insbesondere als Querschnittsanpassungsmodul 1088 ist ein Klappenmodul 1088, vorliegend eine Mehrzahl von Klappenmodulen, vorgesehen.

Ein Klappenmodul 1088 weist eine bewegliche (angedeutet durch den mit dem Bezugszeichen 1030 gekennzeichneten Pfeil), insbesondere klappbare, Klappe 1090 auf mit beispielsweise einem freien Ende und einem an der Innenwand eines Düsenkanals 1013 befestigten Ende. Darüber hinaus kann ein Rückstellelement 1092 (z.B. ein Federelement 1092) zwischen einer Innenwand des Düsenkanals und der Klappe 1090 befestigt sein. Bei anderen Varianten kann das Rückstellelement (zusätzlich oder alternativ) in dem Verbindungspunkt integriert sein.

Das Gas strömt in Strömungsrichtung 1014 und trifft insbesondere auf eine Klappe 1090, insbesondere eine Anströmfläche der Klappe 1090. Abhängig von dem (augenblicklichen) Volumenstrom wird eine entsprechende Kraft durch das Gas auf die Klappe 1090 ausgeübt und die jeweilige Klappenöffnung 1096 bzw. Klappenöffnungsquerschnittsfläche 1096 entsprechend eingestellt. Mit anderen Worten, die Querschnittsfläche wird abhängig von dem (augenblicklichen) Volumenstrom verändert.

Die einzelnen Rückstellelemente 1092 können vorzugsweise unterschiedlich dimensioniert werden, sodass unterschiedliche Öffnungszeitpunkte abhängig vom (augenblicklichen) Volumenstrom möglich sind.

Bei anderen Varianten können auch andere Arten von Modulen in der Leiteinrichtung zum Einsatz kommen, wie Ventile (z.B. passive Ventile, (aktive) Magnetventile etc.).

Es versteht sich, dass die genannten Ausführungsbeispiele zumindest teilweise miteinander kombiniert werden können.

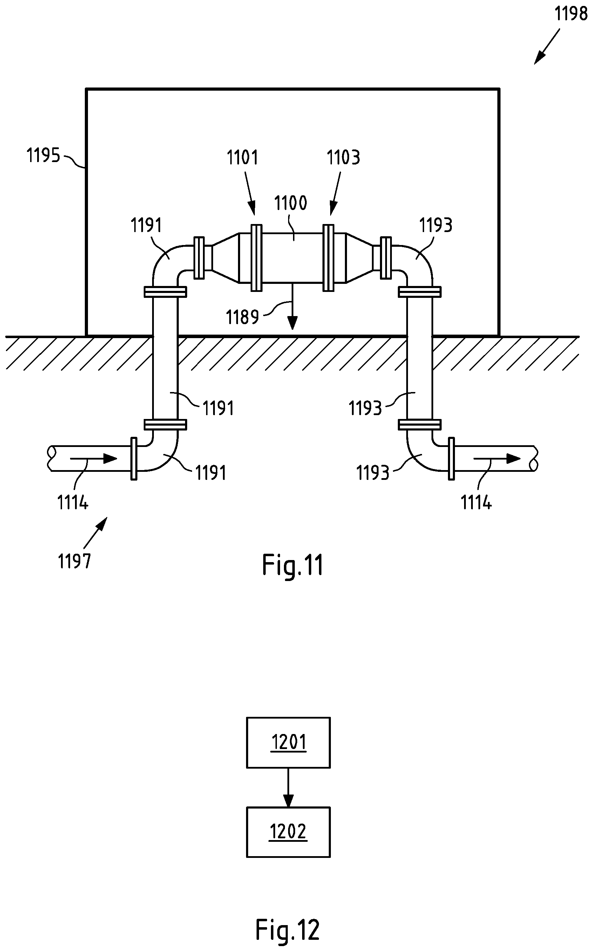

Die Figur 11 zeigt eine schematische Ansicht eines Ausführungsbeispiels eines Fluidruckentspannungssystems 1198 gemäß der vorliegenden Erfindung.

Das Fluidruckentspannungssystem 1198 umfasst mindestens eine Rohrturbinenvorrichtung gemäß einem der Ansprüche 1-8. Zu Gunsten einer besseren Übersicht wurde auf eine Darstellung von Details der Rohrturbinenvorrichtung 1100 in dieser Figur verzichtet.

Insbesondere umfasst das Fluiddruckentspannungssystem 1198 mindestens eine Fluiddruckentspannungsanlage 1195 mit einer Rohrturbinenvorrichtung 1100. Wie bereits beschrieben wurde, kann eine Mehrzahl von Fluiddruckentspannungsanlagen 1195 mit jeweils einer Rohrturbinenvorrichtung 1100 hintereinander geschaltet sein, um eine bestimmtes Gesamt-Fluiddruckgefälle zu nutzen.

Wie ferner aus Figur 11 zu erkennen ist, ist vorliegend ein Eingang 1101 der Rohrturbinenvorrichtung 1100 mit einem ersten Transportnetzrohr 1191 mit einem ersten Fluiddruckniveau und ein Ausgang 1103 der Rohrturbinenvorrichtung 1100 mit einem zweiten Transportnetzrohr 1193 mit einem zweiten Fluiddruckniveau verbunden. Die Rohre 1191, 1193 sind insbesondere angeflanscht.

Das zweite Fluiddruckniveau, also das Fluiddruckniveau in Strömungsrichtung 1114 hinter der Rohrturbinenvorrichtung 1100, ist geringer als das erste Fluiddruckniveau, also das Fluiddruckniveau in Strömungsrichtung 1114 vor der Rohrturbinenvorrichtung 1100.

Das Fluiddruckentspannungssystem 1198 bzw. die Rohrturbinenvorrichtung 1100 wird insbesondere zur Durchführung einer Fluiddruckentspannung von dem ersten Fluiddruckniveau auf das zweite Fluiddruckniveau in dem Fluidtransportnetz 1197 verwendet, wobei durch den Generator der Rohrturbinenvorrichtung 1100 mechanische Energie in elektrische Energie gewandelt wird.

Die elektrische Energie kann über einen elektrischen Anschluss 1189 in ein Stromnetz eingespeist werden.

Die Figur 12 zeigt ein Diagramm eines Ausführungsbeispiels eines Verfahrens gemäß der vorliegenden Erfindung. Das Verfahren dient zum Betreiben einer Rohrturbinenvorrichtung gemäß einem der Ansprüche 1-8.

In einem ersten Schritt 1201 erfolgt ein Bereitstellen eines Fluidvolumenwerts der Rohrturbinenvorrichtung. Der mindestens eine Fluidvolumenwert (beispielsweise eine Fluidströmungsgeschwindigkeit) kann durch ein Messmodul gemessen und von diesem über ein (drahtloses und/oder drahtgebundenes) Kommunikationsnetzwerk bereitgestellt werden, insbesondere einem Regelmodul bereitgestellt werden.

Der bereitgestellte (augenblickliche und insbesondere kontinuierlich gemessene) Fluidvolumenwert kann beispielsweise durch ein in einer Regelstation des Fluidtransportnetzes (ohnehin) angeordnetes Messmodul gemessen und dann insbesondere an das Regelmodul eines Stellmotors übertragen werden.

Alternativ oder zusätzlich kann die Rohrturbinenvorrichtung ein Messmodul umfassen, eingerichtet zum Messen des (augenblicklichen) Fluidvolumenwerts in der Rohrturbinenvorrichtung, beispielsweise hinter der Querschnittsanpassungseinrichtung (also insbesondere hinter der veränderbaren Querschnittsfläche). Auch dieses

Messmodul kann den gemessenen Fluidvolumenwert bereitstellen, insbesondere an das Regelmodul eines Stellmotors übertragen werden.

Zu Gunsten einer besseren Übersicht wurde auf die Darstellung der Messmodule in den vorherigen Ausführungsbeispielen verzichtet.

In einem weiteren Schritt 1202 erfolgt ein Ändern bzw. Anpassen, durch eine Querschnittsanpassungseinrichtung der Rohrturbinenvorrichtung, einer durchströmbaren Querschnittsfläche der Rohrturbinenvorrichtung abhängig von dem bereitgestellten Fluidvolumenwert und einem vorgegebenen Fluidvolumensollwert (wie zuvor beschrieben wurde).

Insbesondere kann ein Regelmodul einen Stellmotor derart ansteuern, dass die Querschnittsfläche abhängig von der festgestellten Differenz zwischen dem bereitgestellten Fluidvolumenwert und einem vorgegebenen Fluidvolumensollwert geändert wird, wie zuvor beschrieben wurde.

Ein Fluidvolumensollwert kann derart vorgegebenen sein, dass die Rohrturbinenvorrichtung (stets, zumindest nahezu stets) in dem optimalen Arbeitspunkt betrieben wird. Der elektrische Energieertrag kann noch weiter verbessert werden. Das Regelmodul kann beispielsweise in dem Stellmotor integriert sein. Der Stellmotor kann derart angesteuert, insbesondere geregelt werden, dass das auf die Laufeinrichtung treffende Fluid stets die optimale Strömungsgeschwindigkeit, insbesondere zur Leistungsoptimierung, besitzt.

**Patentansprüche**

1. Rohrturbinenvorrichtung (800) für ein Fluidtransportnetz (1197), umfassend:

- mindestens eine auf einer Turbinenwelle (812) angeordnete Laufeinrichtung (804),
- mindestens eine in Strömungsrichtung vor der Laufeinrichtung (804) angeordnete Leiteinrichtung (806), und
- mindestens einen mit der Turbinenwelle (812) gekoppelten Generator (808), eingerichtet zum Wandeln einer mechanischen Energie in elektrische Energie,
- mindestens eine Querschnittsanpassungseinrichtung (810), eingerichtet zum Ändern einer durchströmbaren Querschnittsfläche der Rohrturbinenvorrichtung (800) abhängig von dem Volumenstrom des die Rohrturbinenvorrichtung (800) durchströmenden Fluids,

**dadurch gekennzeichnet, dass**
- die Querschnittsanpassungseinrichtung (810) mindestens ein Plattenmodul (864) mit mindestens einem in einer Durchflussöffnung (866) des Plattenmoduls (864) radial beweglich angeordneten Sperrelement (868) umfasst.

2. Rohrturbinenvorrichtung (800) nach Anspruch 1, **dadurch gekennzeichnet, dass**

- die Querschnittsanpassungseinrichtung (810) eingerichtet ist zum Verringern der durchströmbaren Querschnittsfläche, wenn sich der Volumenstrom des die Rohrturbinenvorrichtung (800) durchströmenden Fluids reduziert, und/oder
- die Querschnittsanpassungseinrichtung (810) eingerichtet ist zum Vergrößern der durchströmbaren Querschnittsfläche, wenn sich der Volumenstrom des die Rohrturbinenvorrichtung (800) durchströmenden Fluids erhöht.

3. Rohrturbinenvorrichtung (800) nach Anspruch 1 oder 2, **dadurch gekennzeichnet, dass**

- die Querschnittsanpassungseinrichtung (810) eingerichtet ist zum Ändern der durchströmbaren Querschnittsfläche, derart, dass die Strömungsgeschwindigkeit des die Rohrturbinenvorrichtung (800) durchströmenden Fluids durch die Querschnittsfläche im Wesentlichen gleich bleibt.

4. Rohrturbinenvorrichtung (800) nach einem der vorherigen Ansprüche, **dadurch gekennzeichnet, dass**

- die Querschnittsanpassungseinrichtung (810) eine passiv betriebene Querschnittsanpassungseinrichtung (810) ist.

5. Rohrturbinenvorrichtung (800) nach einem der vorherigen Ansprüche, **dadurch gekennzeichnet, dass**

- die Querschnittsanpassungseinrichtung (810) eine aktiv betriebene Querschnittsanpassungseinrichtung (810) ist.

6. Rohrturbinenvorrichtung (800) nach Anspruch 5, **dadurch gekennzeichnet, dass**

- das mindestens eine Plattenmodul (864) durch einen Stellmotor (820) verstellbar ist, und
- die Querschnittsanpassungseinrichtung (810) mindestens ein Regelmodul umfasst, eingerichtet zum Ansteuern des Stellmotors, abhängig von einem bereitgestellten Fluidvolumenwert und einem vorgegebenen Fluidvolumensollwert.

7. Rohrturbinenvorrichtung (800) nach einem der vorherigen Ansprüche, **dadurch gekennzeichnet, dass**

- die Querschnittsanpassungseinrichtung (810) in der Leiteinrichtung (806) integriert ist.

8. Rohrturbinenvorrichtung (800) nach einem der vorherigen Ansprüche, **dadurch gekennzeichnet, dass**

- durch ein in radialer Richtung durchführbares Verschieben des mindestens einen Sperrelements (868) die durchströmbare Querschnittsfläche veränderbar ist.

9. Verfahren zum Betreiben einer Rohrturbinenvorrichtung (800), insbesondere einer Rohrturbinenvorrichtung (800) nach einem der vorherigen Ansprüche, wobei die Rohrturbinenvorrichtung (800) mindestens eine auf einer Turbinenwelle (812) angeordnete Laufeinrichtung (804), mindestens eine in Strömungsrichtung vor der Laufeinrichtung (804) angeordnete Leiteinrichtung (806), und mindestens einen mit der Turbinenwelle (812) gekoppelten Generator (808) eingerichtet zum Wandeln der mechanischen Energie in elektrische Energie umfasst, das Verfahren umfassend:

- Bereitstellen eines Fluidvolumenwerts der Rohrturbinenvorrichtung (800), und
- Ändern, durch eine Querschnittsanpassungseinrichtung (810) der Rohrturbinenvorrichtung (800), einer durchströmbaren Querschnittsfläche der Rohrturbinenvorrichtung (800) abhängig von einem bereitgestellten Fluidvolumenwert und einem vorgegebenen Fluidvolumensollwert,
- wobei die Querschnittsanpassungseinrichtung (810) mindestens ein Plattenmodul (864) mit mindestens einem in einer Durchflussöffnung (866) des Plattenmoduls (864) radial beweglich angeordneten Sperrelement (868)

umfasst.

10. Fluidruckentspannungssystem (1198) für ein Fluidtransportnetz (1197), insbesondere ein Gasentspannungssystem (1198) für ein Gastransportnetz (1197), umfassend:

- mindestens eine Rohrturbinenvorrichtung (800) nach einem der vorherigen Ansprüche 1 bis 8,
- wobei ein Eingang (1101) der Rohrturbinenvorrichtung (800) mit einem ersten Transportnetzrohr (1191) mit einem ersten Fluiddruckniveau und ein Ausgang (1103) der Rohrturbinenvorrichtung (800) mit einem zweiten Transportnetzrohr (1193) mit einem zweiten Fluiddruckniveau verbunden ist,
- wobei das zweite Fluiddruckniveau geringer ist als das erste Fluiddruckniveau.

11. Verwendung einer Rohrturbinenvorrichtung (800) nach einem der vorherigen Ansprüche 1 bis 8 zur Durchführung einer Fluiddruckentspannung von einem ersten Fluiddruckniveau auf ein zweites Fluiddruckniveau in einem Fluidtransportnetz (1197), wobei durch den Generator (808) mechanische Energie in elektrische Energie gewandelt wird.

**Claims**

1. A tubular turbine device (800) for a fluid transport network (1197), comprising:

- at least one running equipment (804) arranged on a turbine shaft (812),
- at least one guiding equipment (806) arranged upstream of the running equipment (804), and
- at least one generator (808) coupled to the turbine shaft (812) and configured to convert a mechanical energy into electrical energy,
- at least one cross-section adjustment equipment (810) configured to change a cross-sectional area of the tubular turbine device (800) that can be flowed through depending on the volume flow of the fluid flowing through the tubular turbine device (800),
**characterized in that**
- the cross-section adjustment equipment (810) comprises at least one plate module (864) with at least one blocking element (868) arranged radially movably in a through-flow opening (866) of the plate module (864).

2. The tubular turbine device (800) according to claim 1, **characterized in that**

- the cross-section adjustment equipment (810) is configured to reduce the cross-sectional area that can be flowed through by the fluid when the volume flow of the fluid flowing through the tubular turbine device (800) is reduced, and/or
- the cross-section adjustment equipment (810) is configured to increase the cross-sectional area that can be flowed through by the fluid when the volume flow of the fluid flowing through the tubular turbine device (800) increases.

3. The tubular turbine device (800) according to claim 1 or 2, **characterized in that**

- the cross-sectional adjustment equipment (810) is configured to change the cross-sectional area through which fluid can flow such that the flow velocity of the fluid flowing through the tubular turbine device (800) through the cross-sectional area remains substantially the same.

4. The tubular turbine device (800) according to any one of the preceding claims, **characterized in that**

- the cross-section adjustment equipment (810) is a passively operated cross-section adjustment equipment (810).

5. The tubular turbine apparatus (800) according to any one of the preceding claims, **characterized in that**

- the cross-section adjustment equipment (810) is an actively operated cross-section adjustment equipment (810).

6. The tubular turbine apparatus (800) according to claim 5, **characterized in that**

- the cross-section adjustment equipment (810) comprises at least one cross-section adjustment module adjustable by a servomotor (820) and configured to change the cross-sectional area that can be flowed through, and
- the cross-section adjustment equipment (810) comprises at least one control module configured to control the servomotor depending on a provided fluid volume value and a predetermined fluid volume set point.

7. The tubular turbine apparatus (800) according to any one of the preceding claims, **characterized in that**

- the cross-section adjustment equipment (810) is integrated in the guiding equipment (806).

8. The tubular turbine device (800) according to any of the previous claims, **characterized in that**

- the cross-sectional area that can be flowed through is changeable by displacing the at least one blocking element (868) in the radial direction.

9. A method for operating a tubular turbine device (800), in particular a tubular turbine device (800) according to one of the previous claims, wherein the tubular turbine device (800) comprises at least one running equipment (804), at least one guiding equipment (806) arranged upstream of the running equipment (804) in the direction of flow, and at least one generator (812) coupled to the turbine shaft (808) and configured to convert the mechanical energy into electrical energy, the method comprising:

- providing a fluid volume value of the tubular turbine device (800), and
- changing, by a cross-sectional adjustment equipment (810) of the tubular turbine device (800), a cross-sectional area of the tubular turbine device (800) that can be flowed through depending on a provided fluid volume value and a predetermined fluid volume set point,
- wherein the cross-section adjustment equipment (810) comprises at least one plate module (864) with at least one blocking element (868) arranged radially movably in a through-flow opening (866) of the plate module (864).

10. A fluid pressure release system (1198) for a fluid transport network (1197), in particular a gas pressure release system (1198) for a gas transport network (1197), comprising:

- at least one tubular turbine device (800) according to any one of the preceding claims 1 to 8,
- wherein an inlet (1101) of the tubular turbine device (800) is connected to a first transport network pipe (1191) having a first fluid pressure level and an outlet (103) of the tubular turbine device (800) is connected to a second transport network pipe (1193) having a second fluid pressure level,
- wherein the second fluid pressure level is less than the first fluid pressure level.

11. A use of a tubular turbine device (800) according to any one of the preceding claims 1 to 8 for performing a fluid pressure release from a first fluid pressure level to a second fluid pressure level in a fluid transport network (1197), wherein mechanical energy is converted to electrical energy by the generator (808).

**Revendications**

1. Dispositif à turbine tubulaire (800) pour un réseau de transport de fluide (1197), comprenant :

- au moins un dispositif de roulement (104, 204, 304, 404, 504, 604, 704, 804, 904, 1004) disposé sur un arbre de turbine (812),
- au moins un dispositif de guidage (806) disposé en amont du dispositif de roulement (804) dans un sens de l'écoulement, et
- au moins un générateur (808) couplé à l'arbre de turbine (812), configuré pour convertir une énergie mécanique en énergie électrique,
- au moins un dispositif d'adaptation de section transversale (810), configuré pour modifier une surface de section transversale traversable par le dispositif à turbine tubulaire (800) dépendant du débit volumique du fluide traversant le dispositif à turbine tubulaire (800),
**caractérisé en ce que**
- le dispositif d'adaptation de section transversale (810) comprend au moins un module de plaque (864) avec au moins un élément de blocage (868) disposé de manière mobile radialement dans une ouverture d'écoulement (866) du module de plaque (864).

**2.** Dispositif à turbine tubulaire (800) selon la revendication 1, **caractérisé en ce que**

- le dispositif d'adaptation de section transversale (810) est configuré pour réduire la surface de la section transversale traversable lorsque le débit volumique du fluide traversant le dispositif à turbine tubulaire (800) est réduit, et/ou
- le dispositif d'adaptation de section transversale (810) est configuré pour augmenter la surface de section transversale traversable lorsque le débit volumétrique du fluide traversant le dispositif à turbine tubulaire (800) est augmenté.

**3.** Dispositif à turbine tubulaire (800) selon la revendication 1 ou 2, **caractérisé en ce que**

- le dispositif d'adaptation de la section transversale (810) est configuré pour modifier la surface de section transversale traversable de telle sorte que la vitesse d'écoulement du fluide traversant le dispositif à turbine tubulaire (800) à travers la surface de la section transversale reste essentiellement constante.

**4.** Dispositif à turbine tubulaire (800) selon l'une des revendications précédentes, **caractérisé en ce que**

- le dispositif d'adaptation de section transversale (810) est un dispositif d'adaptation de section transversale (810) à fonctionnement passif.

**5.** Dispositif à turbine tubulaire (800) selon l'une des revendications précédentes, **caractérisé en ce que**

- le dispositif d'adaptation de section (810) est un dispositif d'adaptation de section (810) à fonctionnement actif.

**6.** Dispositif à turbine tubulaire (800) selon la revendication 5, **caractérisé en ce que**

- le au moins un module de plaque (864) est ajustable par un servomoteur (820), et
- le dispositif d'adaptation de la section transversale (810) comprend au moins un module de régulation, configuré pour commander le servomoteur, en fonction d'une valeur de volume de fluide fournie et d'une valeur de consigne de volume de fluide prédéfinie.

**7.** Dispositif à turbine tubulaire (800) selon l'une des revendications précédentes, **caractérisé en ce que**

- le dispositif d'adaptation de la section transversale (810) est intégré dans le dispositif de guidage (806).

**8.** Dispositif à turbine tubulaire (800) selon l'une des revendications précédentes, **caractérisé en ce que**

- la surface de section transversale traversable est modifiable par un déplacement de l'au moins un élément de blocage (868) effectuable dans la direction radiale.

**9.** Méthode d'exploitation d'un dispositif à turbine tubulaire (800), en particulier d'un dispositif à turbine tubulaire (800) selon l'une des revendications précédentes, le dispositif à turbine tubulaire (800) comprenant au moins un dispositif de roulement (804) disposé sur un arbre de turbine (812), au moins un dispositif de guidage (806) disposé en amont du dispositif de roulement (804) dans le sens d'écoulement, et au moins un générateur (808) couplé à l'arbre de turbine (812), configuré pour convertir l'énergie mécanique en énergie électrique, la méthode comprenant :

- fournir une valeur de volume de fluide du dispositif à turbine tubulaire (800), et
- modifier, par un dispositif d'adaptation de section transversale (810) du dispositif à turbine tubulaire (800), une surface de section transversale pouvant être traversée du dispositif à turbine tubulaire (800) en fonction d'une valeur de volume de fluide fournie et d'une valeur de consigne de volume de fluide prédéterminée,
- où le dispositif d'adaptation de section transversale (810) comprend au moins un module de plaque (864) avec au moins un élément de blocage (868) disposé de manière mobile radialement dans une ouverture d'écoulement (866) du module de plaque (864).

**10.** Système de détente de pression de fluide (1198) pour un réseau de transport de fluide (1197), en particulier un système de détente de gaz (1198) pour un réseau de transport de gaz (1197), comprenant :

- au moins un dispositif à turbine tubulaire (800) selon l'une des revendications précédentes 1 à 8,
- où une entrée (1101) du dispositif à turbine tubulaire (800) est reliée à un premier tuyau de réseau de transport (1191) avec un premier niveau de pression de fluide et une sortie (1103) du dispositif à turbine tubulaire (800) est reliée à un deuxième tuyau de réseau de transport (1193) avec un deuxième niveau de pression de fluide,
- où le deuxième niveau de pression de fluide est inférieur au premier niveau de pression de fluide.

11. Utilisation d'un dispositif à turbine tubulaire (800) selon l'une des revendications précédentes 1 à 8 pour réaliser une détente de pression de fluide d'un premier niveau de pression de fluide à un deuxième niveau de pression de fluide dans un réseau de transport de fluide (1197), où de l'énergie mécanique est convertie en énergie électrique par le générateur (808).

Fig.1

Fig.2

Fig.3

Fig.4a

Fig.4b

Fig.5a

Fig.5b

Fig.6a

Fig.6b

Fig.7a

Fig.7b

Fig.7c

Fig.8a

Fig.8b

830

866

868

864

874

**Fig.8c**

900

902

984 986 982

978

981

980

904

908

914

912

910

906

**Fig.9**

Fig.10a

Fig.10b

Fig.11

Fig.12

**IN DER BESCHREIBUNG AUFGEFÜHRTE DOKUMENTE**

**In der Beschreibung aufgeführte Patentdokumente**

- EP 3001012 A2
- EP 1905948 A1
- EP 0609674 A2
- US 2917636 A
- US 2008252078 A1
- EP 0568909 A1
- WO 2016120626 A1
- JP 3612153 B
- WO 9857046 A1